# EUROPEAN PATENT SPECIFICATION

(11) **EP 4 414 193 B1**
(45) Date of publication and mention of the grant of the patent: **10.09.2025**
(21) Application number: 22878506.9
(22) Date of filing: 04.10.2022
(51) Int. Cl.: B60J 7/02, B60J 7/043

(54) **SUNROOF APPARATUS**
SCHIEBEDACHVORRICHTUNG
APPAREIL DE TOIT OUVRANT

(30) Priority: 08.10.2021 JP 2021166090
(43) Date of publication of application: 14.08.2024
(73) Proprietor: AISIN CORPORATION, Kariya-shi, Aichi 448-8650 (JP)
(72) Inventor: YANAGITANI, Ryuto, Kariya-shi, Aichi 448-8650 (JP); KAWAZU, Aisei, Kariya-shi, Aichi 448-8650 (JP)
(74) Representative: TBK
(86) International application number: PCT/JP2022/037086
(87) International publication number: WO 2023/058638

(56) References cited:
- JP-A- 2013 147 098
- JP-A- 2015 058 839
- JP-A- 2016 179 728
- JP-A- 2021 094 952
- JP-A- 2021 154 898
- US-A1- 2013 099 528
- US-B2- 10 899 203

## Description

### Technical Field

The present invention relates to a sunroof apparatus.

### Background Art

Patent Literature 1 describes a sunroof apparatus that includes a movable panel covering a roof opening, guide rails extending in a vehicle front-rear direction at both width-direction ends of the roof opening, drive shoes moving along the guide rails, and rear links supporting rear end portions of the movable panel. The drive shoe includes a guide shaft extending in the width direction of the roof opening. The rear link includes a guide groove in which the guide shaft is accommodated. The guide groove includes a guide surface that slides on the guide shaft. Patent literature 2 describes a sunroof apparatus according to the preamble of claim 1.

In the sunroof apparatus, when the drive shoe moves to a vehicle rear side, the guide shaft of the drive shoe slides on the guide surface of the rear link. Then, the rear link rotates in such a way as to stand up, and the rear end portion of the movable panel moves upward relative to a front end portion of the movable panel. As a result, the movable panel tilts up.

### Citation List

### Patent Literature

Patent Literature 1: JP2019-177706A
Patent literature 2: US 10 899 203 B2

### Summary of Invention

### Technical Problem

In the rear link of the sunroof apparatus as described above, the guide groove penetrates through the rear link in a plate thickness direction thereof. Accordingly, the rear link tends to have a large size because of a point that such a guide groove needs to be provided.

### Solution to Problem

Hereinafter, a means for solving the above-described problem and the advantageous effects are described.

A sunroof apparatus that solves the above-described problem includes: a movable panel that is operated among a fully closing position of fully closing a roof opening of a vehicle, a tilt up position of moving a rear end portion higher than the fully closing position, and a fully opening position of fully opening the roof opening; a support bracket that supports the movable panel on each of both sides of the movable panel in a width direction and extends in a front-rear direction; a rail unit that is arranged on each of both sides of the roof opening in the width direction and has a longitudinal direction matching the front-rear direction; a front support portion that supports the support bracket; a rear support portion that supports the support bracket, on a rear side of the front support portion; a drive shoe that moves in the front-rear direction along the rail unit, and thereby drives the front support portion and the rear support portion; and a power transmission member that includes a sliding shaft having a distal end as a free end and having an axial direction matching the width direction, and transmits power from the drive shoe to the rear support portion, wherein the front support portion includes a front link moving in the front-rear direction along the rail unit, based on power transmitted from the drive shoe, and thereby operating the movable panel between the tilt-up position and the fully opening position, the rear support portion includes a rear link sliding on the sliding shaft of the power transmission member, and thereby rotating, around an axis extending in the width direction, between a tilted-down position of moving the movable panel to the fully closing position and a standing position of moving the movable panel to the tilt-up position, the rear link includes a base portion having a plate shape and a covering portion being made of a resin material and covering the base portion, the covering portion includes a sliding surface that slides on the sliding shaft, and the sliding surface is located off the base portion in the width direction.

According to the sunroof apparatus configured as described above, the sliding surface that slides on the sliding shaft is provided in the covering portion that covers the base portion of the rear link. Further, in the rear link, the sliding surface of the covering portion is located off the base portion in the width direction. Thus, the base portion of the rear link does not need to include a sliding hole or a sliding groove for forming a sliding surface. Accordingly, the sunroof apparatus can suppress a size increase of the rear link.

In the sunroof apparatus, the sliding surface may be provided only on one side in the base portion in the width direction.

The sunroof apparatus configured as described above enables a thickness of the rear link in the width direction to be made smaller than in a comparative example in which sliding surfaces are provided on both sides of the base portion in the width direction.

In the sunroof apparatus, the rear support portion may include a link biasing portion that biases, toward the sliding shaft, the rear link located at the tilted-down position.

In the sunroof apparatus configured as described above, the rear link at the tilted-down position is biased toward the sliding shaft. Thus, a posture of the rear link located at the tilted-down position is likely to be kept constant. Accordingly, the sunroof apparatus can suppress rattling of the movable panel located at the fully closing position.

In the sunroof apparatus, the sliding shaft is a first sliding shaft, and the sliding surface is a first sliding surface, then the power transmission member may include a second sliding shaft that extends in a same direction as the first sliding shaft while being at an interval from the first sliding shaft, the covering portion may include a second sliding surface on which the second sliding shaft slides, and the first sliding shaft and the second sliding shaft may slide on the first sliding surface and the second sliding surface, respectively, and thereby, the rear link may move between the tilted-down position and the standing position.

In the sunroof apparatus configured as described above, the two sliding shafts of the power transmission member slide on the two sliding surfaces of the rear link. Thus, the sunroof apparatus enables the rear link to be smoothly moved between the tilted-down position and the standing position.

In the sunroof apparatus, one of the first sliding shaft and the second sliding shaft may include a roller rolling on an associated sliding surface that is one of the first sliding surface and the second sliding surface, and an elastic modulus of the roller may be smaller than an elastic modulus of the covering portion.

There is a possibility that the following problem occurs when a manufacturing error occurs, for example, in a positional relation among the first sliding shaft, the second sliding shaft, the first sliding surface, and the second sliding surface under a situation in which the first sliding shaft and the second sliding shaft slide simultaneously on the first sliding surface and the second sliding surface, respectively. Specifically, when the rear link is moved between the tilted-down position and the standing position, there is a possibility that an excessive load is applied to the power transmission member and the rear link. In this regard, in the sunroof apparatus configured as described above, the second sliding shaft includes the roller having an elastic modulus smaller than that of the covering portion. Thus, the sunroof apparatus enables deformation of the roller to absorb a manufacturing error as described above.

In the sunroof apparatus configured as described above, a material of the base portion may be metal.

The sunroof apparatus can enhance rigidity of the rear link.

In the sunroof apparatus as described above, the covering portion may include a sliding groove that is concave toward the base portion in the width direction, at least a part of the sliding surface may be an inner surface of the sliding groove, and the sliding shaft of the power transmission member may be received in the sliding groove when the sliding shaft slides on at least a part of the sliding surface.

In the sunroof apparatus, the sliding shaft of the power transmission member is received in the sliding groove when the sliding shaft slides on at least a part of the sliding surface of the covering portion of the rear link. When the sliding shaft of the power transmission member is received in the sliding groove, the rear link is unlikely to move even when external force acts on the rear link via the movable panel or the like. Thus, the sunroof apparatus can stabilize a posture of the rear link.

### Advantageous Effects of Invention

The sunroof apparatus can simplify a configuration of the rear link.

### Brief Description of Drawings

[FIG. 1] FIG. 1 is a perspective view illustrating a schematic configuration of a vehicle that includes a sunroof apparatus.
[FIG. 2] FIG. 2 is a plan view illustrating a schematic configuration of the sunroof apparatus.
[FIG. 3] FIG. 3 is a perspective view of the sunroof apparatus.
[FIG. 4] FIG. 4 is a perspective view of the sunroof apparatus in which a rail unit is partially cut away.
[FIG. 5] FIG. 5 is a perspective view of the sunroof apparatus in which the rail unit is partially cut away.
[FIG. 6] FIG. 6 is an exploded perspective view of the rail unit.
[FIG. 7] FIG. 7 is an exploded perspective view of the rail unit.
[FIG. 8] FIG. 8 is an exploded perspective view of a front-side part of the sunroof apparatus.
[FIG. 9] FIG. 9 is an exploded perspective view of the front-side part of the sunroof apparatus.
[FIG. 10] FIG. 10 is an exploded perspective view of a rear-side part of the sunroof apparatus.
[FIG. 11] FIG. 11 is an exploded perspective view of the rear-side part of the sunroof apparatus.
[FIG. 12] FIG. 12 is a plan view of the sunroof apparatus.
[FIG. 13] FIG. 13 is a side view of the sunroof apparatus when a movable panel is located at a fully closing position.
[FIG. 14] FIG. 14 is a side view illustrating a relation between a drive shoe and a front support portion when the movable panel is located at the fully closing position.
[FIG. 15] FIG. 15 is a side view illustrating a relation between a power transmission member and a rear support portion when the movable panel is located at the fully closing position.
[FIG. 16] FIG. 16 is a side view illustrating a relation between the drive shoe and the power transmission member when the movable panel is located at the fully closing position.
[FIG. 17] FIG. 17 is a side view of the sunroof apparatus when the movable panel is located between the fully closing position and a tilt-up position.
[FIG. 18] FIG. 18 is a side view illustrating a relation between the power transmission member and the rear support portion when the movable panel is located between the fully closing position and the tilt-up position.
[FIG. 19] FIG. 19 is a side view of the sunroof apparatus when the movable panel is located at the tilt-up position.
[FIG. 20] FIG. 20 is a side view illustrating a relation between the power transmission member and the rear support portion when the movable panel is located at the tilt-up position.
[FIG. 21] FIG. 21 is a side view illustrating a relation between the drive shoe and the power transmission member when the movable panel is located at the tilt-up position.
[FIG. 22] FIG. 22 is a side view of the sunroof apparatus when the movable panel is located at a lift-up position.
[FIG. 23] FIG. 23 is a side view illustrating a relation between the drive shoe and the front support portion when the movable panel is located at the lift-up position.
[FIG. 24] FIG. 24 is a side view of the sunroof apparatus when the movable panel is located at a fully opening position.
[FIG. 25] FIG. 25 is a side view illustrating a relation among the drive shoe, the front support portion, and the rear support portion when the movable panel is located at the fully opening position.
[FIG. 26] FIG. 26 is a perspective view of a rear portion of the sunroof apparatus.
[FIG. 27] FIG. 27 is an exploded perspective view of the rear portion of the sunroof apparatus.
[FIG. 28] FIG. 28 is an exploded perspective view of the rear portion of the sunroof apparatus.
[FIG. 29] FIG. 29 is an exploded perspective view of the rear portion of the sunroof apparatus.
[FIG. 30] FIG. 30 is an exploded perspective view of the rear portion of the sunroof apparatus.
[FIG. 31] FIG. 31 is an exploded perspective view of a first rear link of the sunroof apparatus.
[FIG. 32] FIG. 32 is a sectional view of the sunroof apparatus when the movable panel is arranged at the fully closing position.
[FIG. 33] FIG. 33 is a sectional view of the sunroof apparatus when the movable panel is arranged at the fully closing position.
[FIG. 34] FIG. 34 is a sectional view of the sunroof apparatus while the movable panel is being tilted up.
[FIG. 35] FIG. 35 is a sectional view of the sunroof apparatus while the movable panel is being tilted up.
[FIG. 36] FIG. 36 is a sectional view of the sunroof apparatus when the movable panel is arranged at the tilt-up position.
[FIG. 37] FIG. 37 is a sectional view of the sunroof apparatus when the movable panel is arranged at the tilt-up position.

### Description of Embodiments

### (First Embodiment)

Hereinafter, a first embodiment of a vehicle including a sunroof apparatus will be described with reference to the drawings.

### <Configuration of First Embodiment>

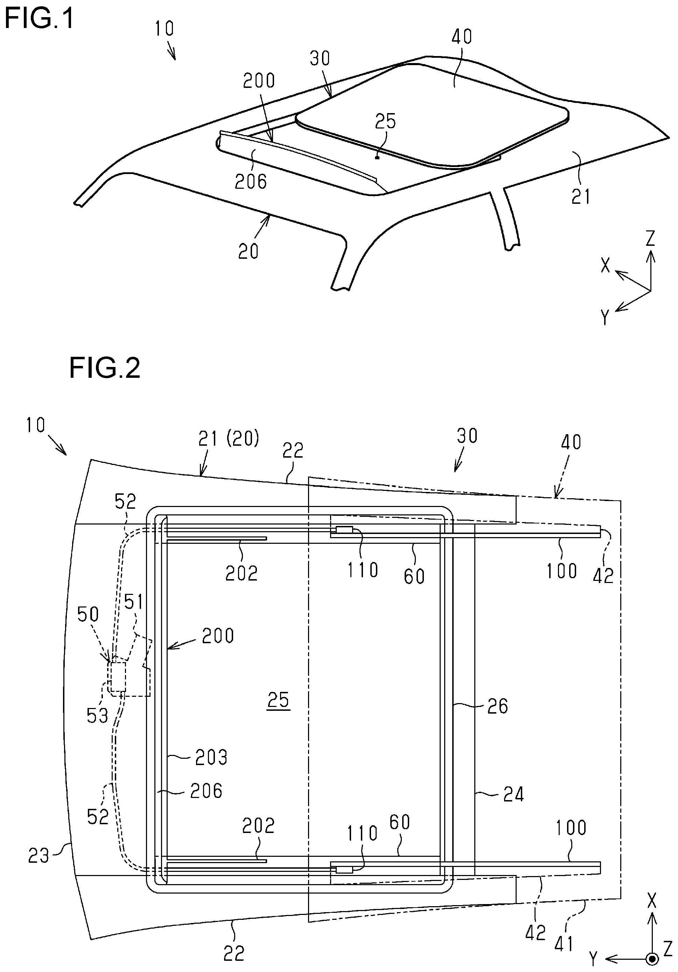

As illustrated in FIG. 1, the vehicle 10 includes a vehicle body 20 and a sunroof apparatus 30.

In the drawings, a direction in which the X axis extends indicates a width direction of the vehicle 10, a direction in which the Y axis extends indicates a front-rear direction of the vehicle 10, and a direction in which the Z axis extends indicates an up-down direction of the vehicle 10. In the following description, "the width direction of the vehicle 10, the front-rear direction of the vehicle 10, and the up-down direction of the vehicle 10" are referred to also as "the width direction, the front-rear direction, and the up-down direction," respectively. In the width direction, a direction of separating from the center of the vehicle 10 is referred to also as an outward direction, and a direction of approaching the center of the vehicle 10 is referred to also as an inward direction.

### <Vehicle Body 20>

As illustrated in FIG. 2, the vehicle body 20 includes a roof panel 21 that constitutes a roof. The roof panel 21 includes two side panels 22 extending in the front-rear direction, a front panel 23 that connects front ends of the two side panels 22 to each other, and a rear panel 24 that connects rear ends of the two side panels 22 to each other. The roof panel 21 includes a roof opening 25 defined by the two side panels 22, the front panel 23, and the rear panel 24. In a plan view from an upper side, the roof opening 25 has a rectangular shape, and has a longitudinal direction that matches the width direction, and a lateral direction that matches the front-rear direction. A weather strip 26 is installed on the roof panel 21 in such a way as to surround the roof opening 25.

### <Sunroof Apparatus 30>

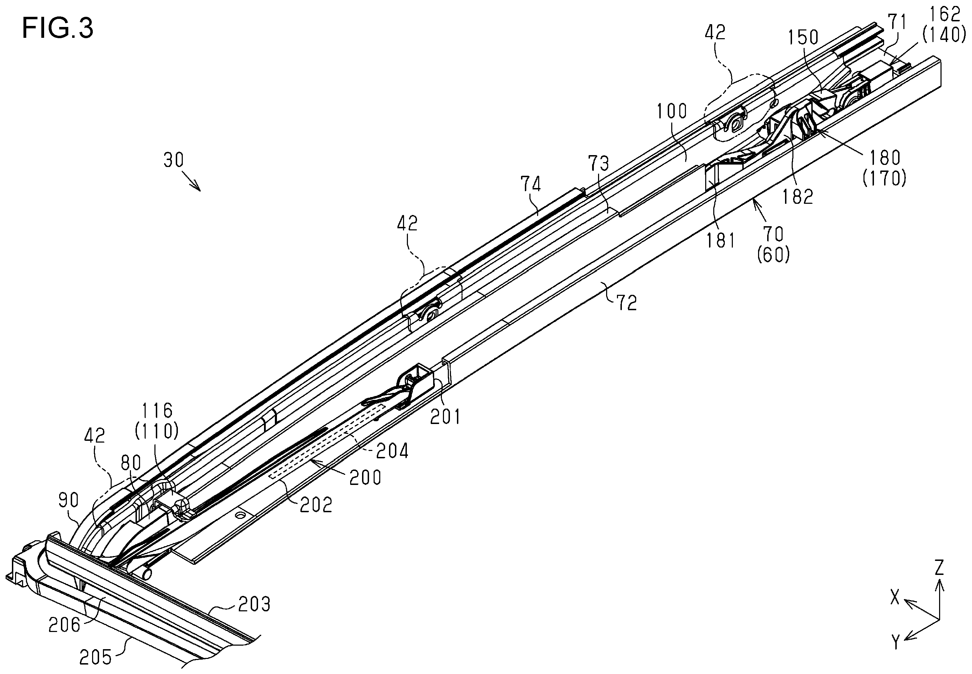

As illustrated in FIG. 2, the sunroof apparatus 30 includes a movable panel 40 and an actuator 50. As illustrated in FIG. 3 to FIG. 5, the sunroof apparatus 30 includes rail units 60, support brackets 100, drive shoes 110, front support portions 120, rear support portions 140, power transmission members 170, and a deflector 200.

As illustrated in FIG. 2, a large part of components of the sunroof apparatus 30 have a left-and-right symmetrical shape, and are arranged on right and left sides of the roof opening 25. Thus, in the following description, the components on a right side in the sunroof apparatus 30 will be described. Further, the components of the sunroof apparatus 30 will be described based on directions in a case of being mounted on the vehicle body 20.

### <Movable Panel 40>

As illustrated in FIG. 2, the movable panel 40 includes a plate-shaped panel body 41 and a panel bracket 42 that is joined to the panel body 41.

The panel body 41 is made of a material that can transmit light and whose examples include glass, resin, and the like. The panel body 41 has a size and a shape that depend on the roof opening 25. A periphery of the panel body 41 is preferably coated with a resin material for the purpose of protecting the panel body 41. The panel bracket 42 is joined to a lower surface of the panel body 41. The panel brackets 42 extend in the front-rear direction on both width-direction sides of the panel body 41. For example, the panel bracket 42 is formed by reaction injection molding. The panel body 41 and the panel bracket 42 can be integrated with each other at the time of the forming by the reaction injection molding. Alternatively, the panel body 41 and the panel bracket 42 that have been manufactured separately from each other can be joined to each other by urethane adhesion.

### <Actuator 50>

As illustrated in FIG. 2, the actuator 50 includes a motor 51, a cable 52 driven by the motor 51, and a conversion mechanism 53 converting rotational movement of an output shaft of the motor 51 into advancing and retreating movement of the cable 52.

The motor 51 and the conversion mechanism 53 are fixed to a width-direction center portion of the front panel 23. The cable 52 is a push-pull cable that can push and pull the drive shoe 110. The cable 52 is arranged along the front panel 23 and the rail unit 60. A distal end of the cable 52 is connected, inside the rail unit 60, to the drive shoe 110. Thus, the actuator 50 causes the drive shoe 110 to advance or retreat along the rail unit 60, depending on a rotational direction of the output shaft of the motor 51.

### <Rail Unit 60>

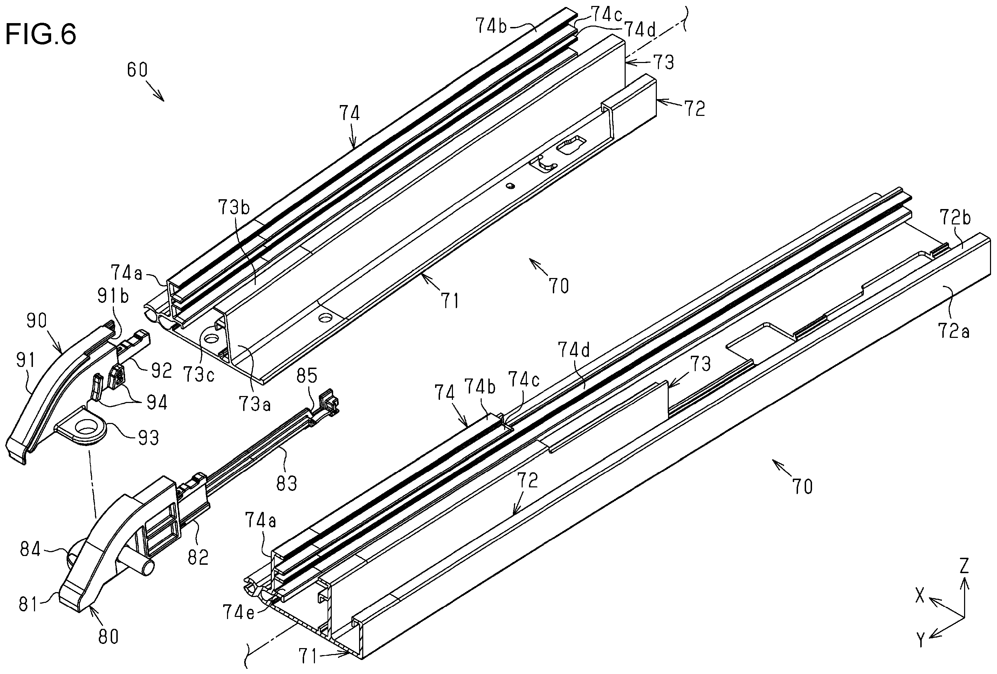

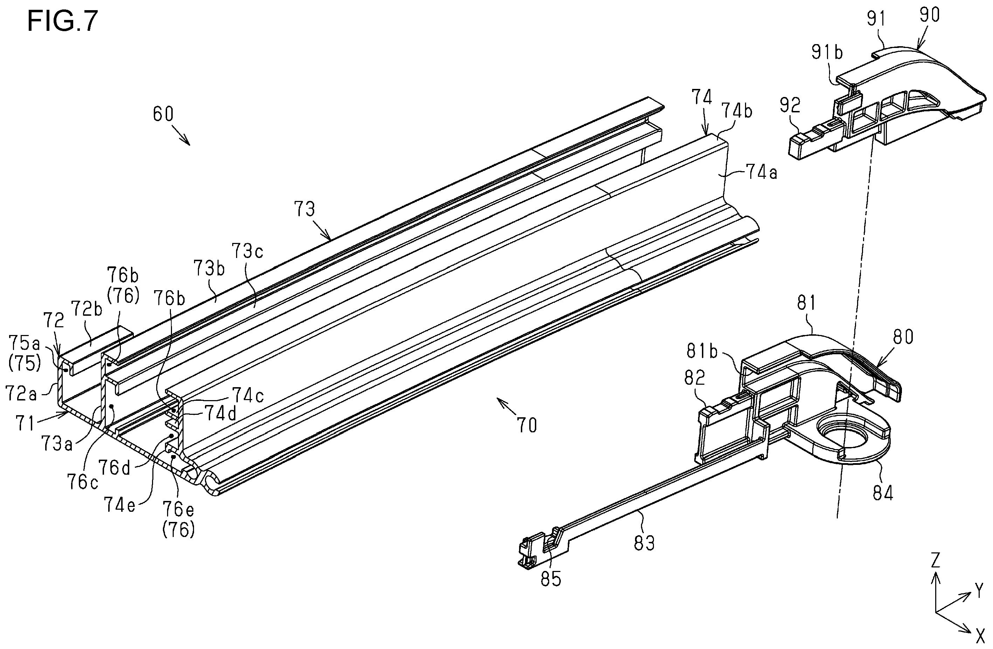

As illustrated in FIG. 6 and FIG. 7, the rail unit 60 includes a main rail 70 that extends in the front-rear direction, and an inner cap 80 and an outer cap 90 that are attached to a front end portion of the main rail 70.

The main rail 70 is slightly curved in such a way as to be convex upward in a side view in the width direction. In the first embodiment, the main rail extending in the front-rear direction embraces not only a main rail extending linearly but also a main rail extending while being curved. The main rail 70 includes a bottom wall 71, and an inner wall 72, an intermediate wall 73, and an outer wall 74 that extend from the bottom wall 71. The main rail 70 is formed, for example, by extruding a metal material such as aluminum and then cutting the extruded material. In this regard, the main rail 70 has a sectional shape constant in the longitudinal direction, except for the cut part.

The bottom wall 71 has a flat plate shape, and has a longitudinal direction that matches the front-rear direction, a plate thickness direction that matches the up-down direction, and a lateral direction that matches the width direction. The bottom wall 71 has a sectional shape uniform in the longitudinal direction, except for portions where penetration holes are provided.

As illustrated in FIG. 6 and FIG. 7, the inner wall 72 extends from a width-direction inner end of the bottom wall 71. As illustrated in FIG. 6, a length of the inner wall 72 in the front-rear direction is shorter than a length of the bottom wall 71 in the front-rear direction. Specifically, a front end of the inner wall 72 is located on a rear side of a front end of the bottom wall 71, and a rear end of the inner wall 72 coincides with a rear end of the bottom wall 71. As illustrated in FIG. 7, the inner wall 72 has a first inner wall 72a extending upward from the bottom wall 71, and a second inner wall 72b extending from a distal end of the first inner wall 72a toward the intermediate wall 73. A distal end of the second inner wall 72b is bent toward the bottom wall 71.

As illustrated in FIG. 6 and FIG. 7, the intermediate wall 73 extends from a width-direction intermediate portion of the bottom wall 71. As illustrated in FIG. 6, a length of the intermediate wall 73 in the front-rear direction is shorter than the length of the bottom wall 71 in the front-rear direction. Specifically, a front end of the intermediate wall 73 coincides with the front end of the bottom wall 71, but a rear end of the intermediate wall 73 is located on a front side of the rear end of the bottom wall 71. The rear end of the intermediate wall 73 is located on a rear side of the front end of the inner wall 72. In other words, the intermediate wall 73 and the inner wall 72 partially face each other in the width direction. As illustrated in FIG. 7, the intermediate wall 73 includes a first intermediate wall 73a extending upward from the bottom wall 71, and a second intermediate wall 73b and a third intermediate wall 73c that extend from the first intermediate wall 73a toward the outer wall 74. The second intermediate wall 73b extends from a distal end of the first intermediate wall 73a. The third intermediate wall 73c is located between the second intermediate wall 73b and the bottom wall 71. A distal end of the third intermediate wall 73c is bent toward the bottom wall 71.

As illustrated in FIG. 6 and FIG. 7, the outer wall 74 extends from an outer end of the bottom wall 71. As illustrated in FIG. 6, a length of the outer wall 74 in the front-rear direction is equivalent to the length of the bottom wall 71 in the front-rear direction. Namely, a front end of the outer wall 74 coincides with the front end of the bottom wall 71, and a rear end of the outer wall 74 coincides with the rear end of the bottom wall 71. As illustrated in FIG. 7, the outer wall 74 includes a first outer wall 74a extending upward from the bottom wall 71, and a second outer wall 74b, a third outer wall 74c, a fourth outer wall 74d, and a fifth outer wall 74e that extend from the first outer wall 74a toward the intermediate wall 73. The first outer wall 74a extends toward the intermediate wall 73 while being curved, and then extends upward. The second outer wall 74b extends inward in the width direction from a distal end of the first outer wall 74a. The third outer wall 74c, the fourth outer wall 74d, and the fifth outer wall 74e are located between the second outer wall 74b and the bottom wall 71. In the width direction, the second outer wall 74b and the third outer wall 74c face the second intermediate wall 73b and the third intermediate wall 73c, respectively. A distal end of the fifth outer wall 74e is slightly bent toward the bottom wall 71. As illustrated in FIG. 6, in the outer wall 74, the second outer wall 74b and the third outer wall 74c are shorter in length in the front-rear direction than the fourth outer wall 74d and the fifth outer wall 74e. Specifically, a front end of the second outer wall 74b and a front end of the third outer wall 74c coincide with the a front end of the fourth outer wall 74d and a front end of the fifth outer wall 74e, but a rear end of the second outer wall 74b and a rear end of the third outer wall 74c are located on front sides of a rear end of the fourth outer wall 74d and a rear end of the fifth outer wall 74e. A rear end portion in the upper end portion of the first outer wall 74a is also cut out.

As illustrated in FIG. 7, in the following description, in the main rail 70, a space defined by the bottom wall 71, the inner wall 72, and the intermediate wall 73 is referred to also as a first accommodation space 75, and a space defined by the bottom wall 71, the intermediate wall 73, and the outer wall 74 is referred to also as a second accommodation space 76. The first accommodation space 75 is located on an inner side in the width direction, and the second accommodation space 76 is located on an outer side in the width direction. As described above, the intermediate wall 73 does not extend as far as the rear end of the bottom wall 71 in the front-rear direction, and thus, the first accommodation space 75 and the second accommodation space 76 connect to each other in the width direction in a rear portion of the main rail 70.

The first accommodation space 75 includes a first guide groove 75a. The first guide groove 75a is a space defined by the bottom wall 71, the first inner wall 72a, and the second inner wall 72b. Meanwhile, the second accommodation space 76 includes a second guide groove 76b, a third guide groove 76c, a fourth guide groove 76d, and a fifth guide groove 76e. The second guide groove 76b includes a space defined by the first intermediate wall 73a, the second intermediate wall 73b, and the third intermediate wall 73c, and a space defined by the first outer wall 74a, the second outer wall 74b, and the third outer wall 74c. The third guide groove 76c is a space defined by the bottom wall 71, the first intermediate wall 73a, and the third intermediate wall 73c. The fourth guide groove 76d is a space defined by the first outer wall 74a, the fourth outer wall 74d, and the fifth outer wall 74e. The fifth guide groove 76e is a space defined by the bottom wall 71, the first outer wall 74a, and the fifth outer wall 74e.

As illustrated in FIG. 6 and FIG. 7, the inner cap 80 includes an extension portion 81 that constitutes a front end portion of the rail unit 60, a fitted portion 82 that is fitted into the main rail 70, an insertion portion 83 that is inserted into the main rail 70, and a fixed portion 84 that is fixed to the roof panel 21. The extension portion 81 includes a second guide groove 81b having a depth direction that matches the width direction. The second guide groove 81b curves downward while shifting to a front side. The insertion portion 83 linearly extends to a rear side more than the fitted portion 82. The insertion portion 83 includes an engagement concave portion 85 that is concave downward. The engagement portion 85 is located near a rear end of the insertion portion 83. The fitted portion 82 is fitted into the third guide groove 76c of the main rail 70, and thereby, the inner cap 80 is integrated with the main rail 70. At this time, the second guide groove 81b is connected to the second guide groove 76b of the main rail 70 in the front-rear direction. The insertion portion 83 is located on the bottom wall 71 of the main rail 70.

The outer cap 90 has a configuration substantially similar to that of the inner cap 80. The outer cap 90 includes an extension portion 91, a fitted portion 92, and a fixed portion 93 that correspond to the extension portion 81, the fitted portion 82, and the fixed portion 84 of the inner cap 80, and includes a restriction portion 94 restricting movement of a distal end portion of the support bracket 100. The restriction portion 94 is configured as two ribs that protrude inward in the width direction. The fitted portion 92 is fitted into the fourth guide groove 76d of the main rail 70, and thereby, the outer cap 90 is integrated with the main rail 70. At this time, the second guide groove 91b of the outer cap 90 is connected to the second guide groove 76b of the main rail 70 in the front-rear direction.

As illustrated in FIG. 2, the rail unit 60 is fixed to the vehicle body 20 in such a way as to be adjacent to the side panel 22. Thus, the rail unit 60 extends in the front-rear direction on both width-direction sides of the roof opening 25.

### <Support Bracket 100>

As illustrated in FIG. 2, the support bracket 100 extends in the front-rear direction. A length of the support bracket 100 is preferably equivalent to a length of the panel bracket 42 of the movable panel 40. The support bracket 100 is formed, for example, by pressing a metal plate.

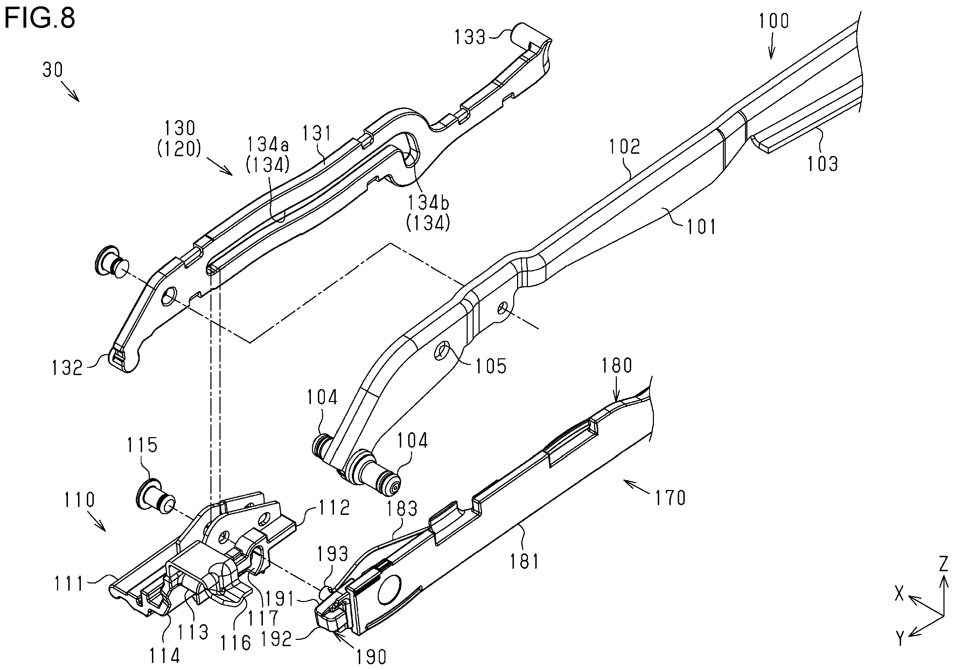

As illustrated in FIG. 8 to FIG. 11, the support bracket 100 includes a main wall 101 that extends in the front-rear direction, an upper flange 102 and a lower flange 103 that bend from and extend from the main wall 101, a support shaft 104 that has an axial direction matching the width direction, and a plurality of fixing holes 105 that each have an axial direction matching the width direction.

The main wall 101 has a plate shape, and has a plate thickness direction that matches the width direction. The upper flange 102 extends outward in the width direction from an upper end of the main wall 101, and the lower flange 103 extends inward in the width direction from a lower end of the main wall 101. The support shaft 104 has a cylindrical shape, and extends symmetrically in the width direction from the distal end portion of the support bracket 100. A plurality of the fixing holes 105 are located at intervals in a longitudinal direction of the support bracket 100.

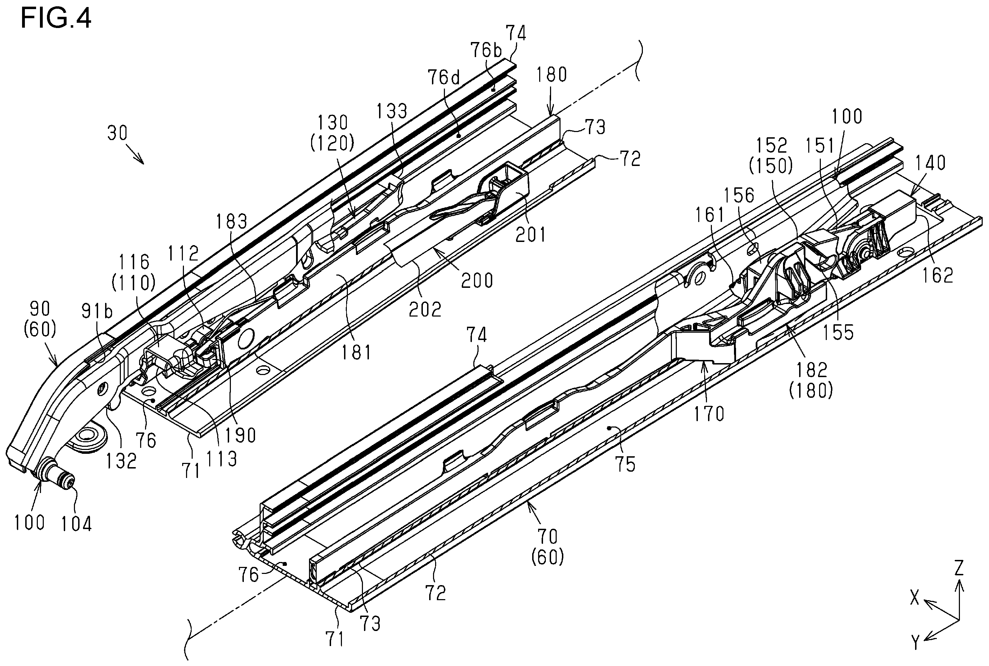

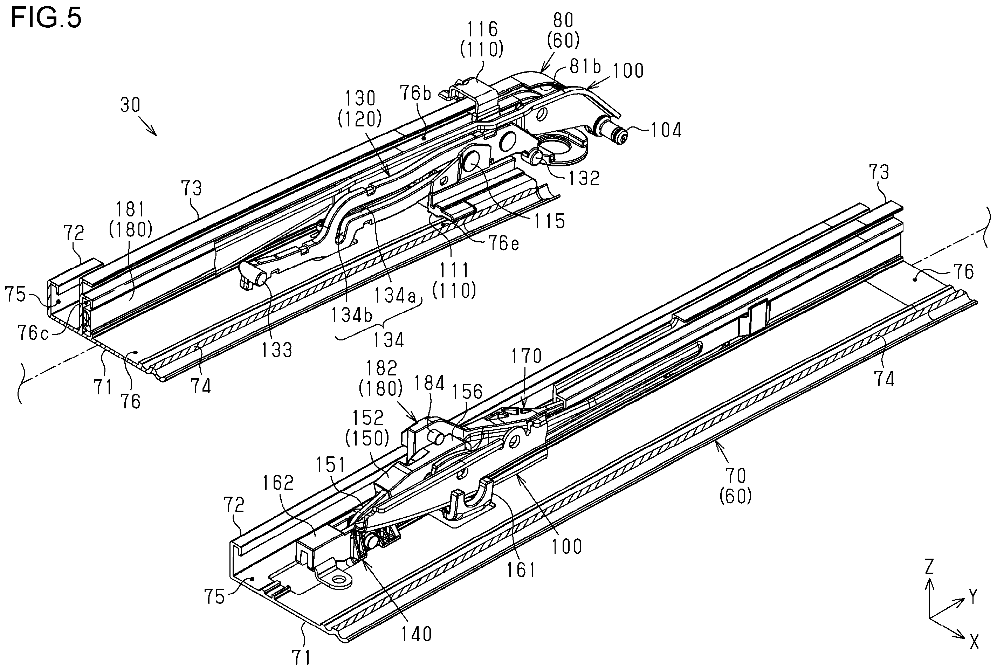

As illustrated in FIG. 4 and FIG. 5, the support bracket 100 is accommodated in the rail unit 60. Specifically, in a state illustrated in FIG. 4 and FIG. 5, the support bracket 100 is arranged between the intermediate wall 73 and the outer wall 74 of the main rail 70, and between the inner cap 80 and the outer cap 90. The support shaft 104 is accommodated in the second guide grooves 81b and 91b of the rail unit 60. Thus, when the support bracket 100 moves relative to the rail unit 60, the support shaft 104 slides on wall portions that form the second guide grooves 76b, 81b, and 91b of the rail unit 60.

As illustrated in FIG. 2, the support bracket 100 is connected to the panel bracket 42 of the movable panel 40 in a state of being be adjacent to the panel bracket 42 in the width direction. Specifically, the support bracket 100 is connected to the panel bracket 42 via a plurality of fastening members that pass through a plurality of the fixing holes 105. Thus, when the support bracket 100 moves relative to the rail unit 60, the movable panel 40 moves together with the support bracket 100.

### <Drive Shoe 110>

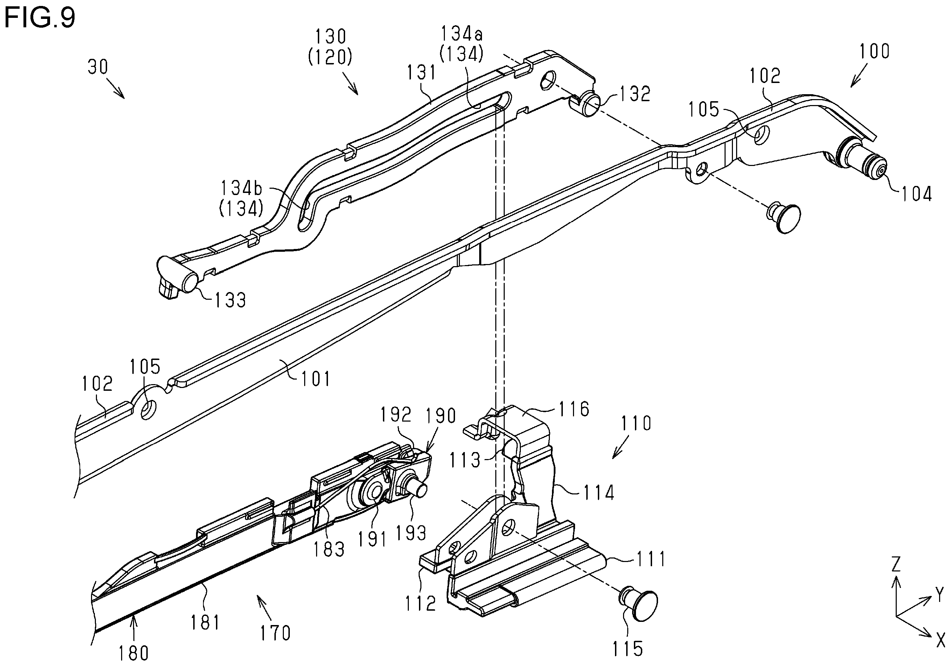

As illustrated in FIG. 8 and FIG. 9, the drive shoe 110 includes a first sliding portion 111, a second sliding portion 112, and a third sliding portion 113 that slide on the rail unit 60. The drive shoe 110 includes an extending portion 114 that extends in the width direction from the first sliding portion 111, a guide shaft 115 that connects the first sliding portion 111 and the second sliding portion 112 to each other in the width direction, and a holding portion 116 that extends in the width direction from the extending portion 114.

The first sliding portion 111 and the second sliding portion 112 are adjacent to each other at an interval in the width direction. The first sliding portion 111 is located on a width-direction outer side of the second sliding portion 112. The second sliding portion 112 extends rearward from the extending portion 114. The second sliding portion 112 includes an engagement groove 117 on a surface that faces inward in the width direction. The engagement groove 117 is concave outward in the width direction. The engagement groove 117 is curved in such a way as to extend upward while shifting to a rear side.

The third sliding portion 113 extends inward in the width direction from an upper end of the extending portion 114. A shape of a section of the third sliding portion 113 perpendicular to an extending direction of the third sliding portion 113 is a semicircular shape. A peripheral surface of the extending portion 114 faces upward, and a flat surface of the extending portion 114 faces downward. The extending portion 114 obliquely extends upward while shifting inward in the width direction. The holding portion 116 extends upward from a distal end of the extending portion 114, and then extends inward in the width direction.

As illustrated in FIG. 4 and FIG. 5, the drive shoe 110 is accommodated in the second accommodation space 76 of the main rail 70. Specifically, the first sliding portion 111 is accommodated in the fifth guide groove 76e of the main rail 70, the second sliding portion 112 contacts with the bottom wall 71 of the main rail 70, and the third sliding portion 113 is accommodated in the second guide groove 76b of the main rail 70. Thus, the drive shoe 110 is allowed to move in the longitudinal direction of the main rail 70, and is restricted from moving in a direction perpendicular to the longitudinal direction of the main rail 70.

As simply illustrated in FIG. 2, the cable 52 of the actuator 50 is connected to the first sliding portion 111. Thus, when the actuator 50 is driven, power of the actuator 50 is transmitted to the first sliding portion 111. In the state illustrated in FIG. 4, the holding portion 116 extends inward in the width direction while avoiding, from an upper side, the intermediate wall 73 of the rail unit 60.

### <Front Support Portion 120>

As illustrated in FIG. 8 and FIG. 9, the front support portion 120 includes a front link 130 supporting a distal end portion of the support bracket 100. The front link 130 is formed, for example, by coating a metal plate with resin.

The front link 130 includes a link body 131 that has a flat plate shape, and an engagement protrusion 132 and a sliding protrusion 133 that extend in the width direction from the link body 131. The link body 131 includes a guide hole 134 penetrating therethrough in the width direction. The guide hole 134 includes a first guide hole 134a that extends in a longitudinal direction of the link body 131, and a second guide hole 134b that extends in a direction intersecting with the longitudinal direction of the link body 131. A terminal end of the first guide hole 134a and a start end of the second guide hole 134b are connected to each other. The engagement protrusion 132 is located at a distal end of the front link 130, and the sliding protrusion 133 is located at a proximal end of the front link 130. The engagement protrusion 132 and the sliding protrusion 133 extend outward in the width direction. The engagement protrusion 132 is shorter than the sliding protrusion 133.

As illustrated in FIG. 8 and FIG.9, the distal end of the front link 130 is coupled to a distal end of the support bracket 100 by a coupling pin that has an axial direction matching the width direction. Namely, the front link 130 is rotatable, relative to the support bracket 100, around the axis extending in the width direction. The guide shaft 115 of the drive shoe 110 is inserted into the guide hole 134 of the front link 130. As illustrated in FIG. 4 and FIG. 5, the front link 130 is accommodated in the second accommodation space 76 of the main rail 70. At this time, the engagement protrusion 132 engages with the restriction portion 94 of the outer cap 90 illustrated in FIG. 6, and the sliding protrusion 133 is accommodated in the fourth guide groove 76d of the main rail 70, as illustrated in FIG. 4.

### <Rear Support Portion 140>

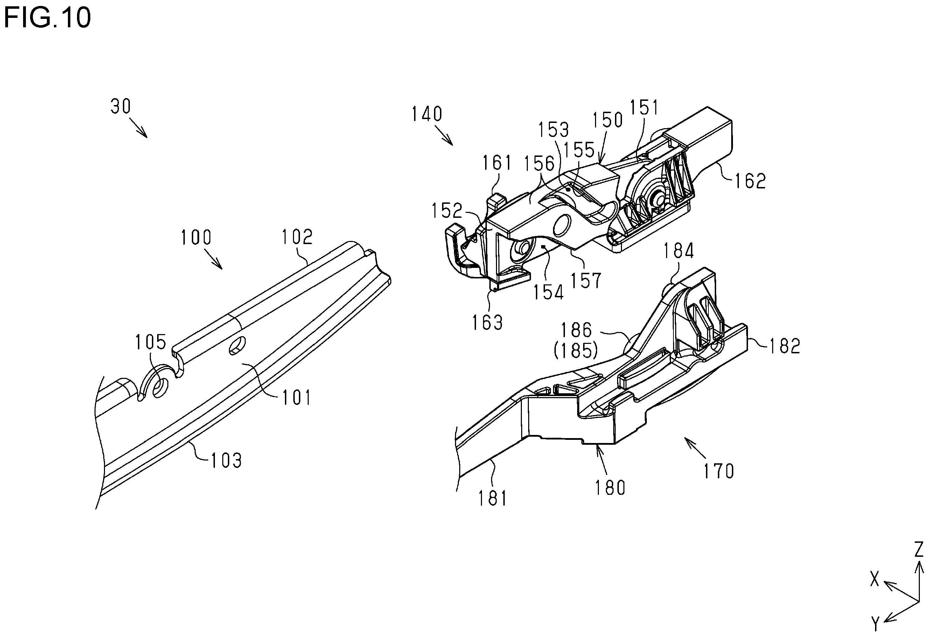

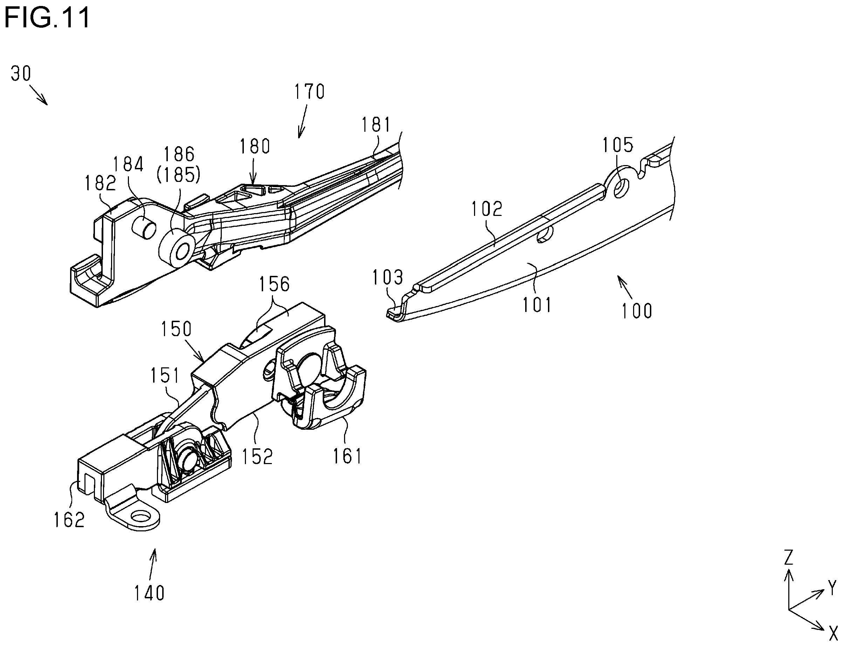

As illustrated in FIG. 10 and FIG. 11, the rear support portion 140 includes a rear link 150, a slider 161 that is supported by the rear link 150, a link support portion 162 that supports the rear link 150, and a link biasing portion 163 that biases the rear link 150.

The rear link 150 includes a base portion 151 that has a rectangular plate shape, and a covering portion 152 that covers the base portion 151. In the following description, in the rear link 150, a part supporting the slider 161 is referred to as a distal end portion, and a part supported by the link support portion 162 is referred to as a proximal end portion.

The base portion 151 is made of a metal material, and the covering portion 152 is made of a resin material having an elastic modulus lower than that of the base 151. The covering portion 152 covers a part included in the base portion 151 and excluding the proximal end portion of the base portion 151. The covering portion 152 covers the base portion 151 in an unbalanced manner with respect to a plate thickness direction of the base portion 151. Specifically, in the width direction, a thickness of the covering portion 152 on an inner side in the rear link 150 is larger than a thickness of the covering portion 152 on an outer side in the rear link 150. In one example, the covering portion 152 that covers the base portion 151 is formed by injecting liquid resin around the base portion 151 placed in a mold and then solidifying the liquid resin. Thus, changing the mold can change a shape of the covering portion 152.

The covering portion 152 includes a first concave portion 153 and a second concave portion 154 that each have a depth direction matching the plate thickness direction of the base portion 151. The first concave portion 153 and the second concave portion 154 are concave toward the base portion 151 in the width direction. The first concave portion 153 and the second concave portion 154 are provided only on a surface included in the covering portion 152 and facing inward in the width direction. In a side view in the width direction, the first concave portion 153 and the second concave portion 154 extend in a direction inclined from a longitudinal direction of the rear link 150. In the same side view, a width of the first concave portion 153 is narrower than a width of the second concave portion 154. The first concave portion 153 is located near the proximal end of the rear link 150, and the second concave portion 154 is located near the distal end of the rear link 150. The first concave portion 153 corresponds to "sliding groove".

The covering portion 152 includes first sliding surfaces 155 and 156 and a second sliding surface 157. The first sliding surface 155 includes an inner surface of the first concave portion 153, and the first sliding surface 156 includes an outer surface of the covering portion 152 and an inner surface of the first concave portion 153, In other words, the first sliding surface 155 includes the inclination surface inclined from the longitudinal direction of the rear link 150, and the first sliding surface 156 includes the horizontal surface extending in substantially the same direction as the longitudinal direction of the rear link 150, and includes the inclination surface inclined from the longitudinal direction of rear link 150. Meanwhile, the second sliding surface 157 includes an inner surface of the second concave portion 154. In other words, the second sliding surface 157 includes the inclination surface inclined from the longitudinal direction of the rear link 150. The first sliding surfaces 155 and 156 and the second sliding surface 157 are located off the base portion 151 in the width direction. The first sliding surfaces 155 and 156 and the second sliding surface 157 intersect with a rotational direction of the rear link 150.

The distal end portion of the rear link 150 supports the slider 161 via a coupling pin having an axial direction that matches the width direction. The slider 161 is rotatable, relative to the rear link 150, around the axis extending in the width direction. The rotational axis of the slider 161 intersects with a bottom surface of the second concave portion 154. The rear link 150 supports the slider 161 on a side opposite to a side where the first concave portion 153 and the second concave portion 154 are provided.

The link support portion 162 supports the proximal end portion of the rear link 150 via a coupling pin that has an axial direction matching the width direction. Thus, the rear link 150 is rotatable around the axis extending in the width direction. In the following description, a position at which the rear link 150 is tilted down as illustrated in FIG. 10 and FIG. 11 is referred to also as "tilted-down position", and a position at which the rear link 150 stands up from the tilted-down position is referred to also as the "standing position". Namely, the rear link 150 rotates between the tilted-down position and the standing position.

The link biasing portion 163 is formed, into a block shape, of elastomer such as rubber or resin. The link biasing portion 163 is fixed at a position near the distal end of the rear link 150. Specifically, the link biasing portion 163 is fixed to a surface included in the rear link 150 and facing the downward, in a posture illustrated in FIG. 10.

As illustrated in FIG. 4 and FIG. 5, the rear support portion 140 is located at a rear end portion of the rail unit 60 where the intermediate wall 73 does not exist. In other words, the rear support portion 140 is accommodated in the first accommodation space 75 and the second accommodation space 76 of the rail unit 60 in such a way as to extend from the first accommodation space 75 to the second accommodation space 76.

The slider 161 sandwiches the support bracket 100 both in the width direction and in the up-down direction. Thus, the slider 161 supports the support bracket 100 in such a way as to be movable. In the support bracket 100, a portion supported by the slider 161 is located on a rear side of a part coupled to the front link 130. In this regard, it can be said that the rear support portion 140 supports the support bracket 100, on a rear side of the front support portion 120. It is preferable that a manner of supporting the support bracket 100 by the slider 161 is appropriately changed depending on a sectional shape of the support bracket 100.

The link support portion 162 is preferably fixed to the bottom wall 71 of the main rail 70 by using a fastening member such as a screw. The link support portion 162 does not move relative to the main rail 70 even when the drive shoe 110 is driven.

The link biasing portion 163 is compressed between the rear link 150 and the bottom wall 71 of the rail unit 60, which is hidden by other components in FIG. 4 and FIG. 5. Thus, the link biasing portion 163 applies, to the rear link 150, elastic force depending on an amount of compressive deformation. Namely, the link biasing portion 163 biases the rear link 150 located at the tilted-down position, in a direction in which the rear link 150 rotates from the tilted-down position to the standing position.

### <Power Transmission Member 170>

As illustrated in FIG. 8 to FIG. 11, the power transmission member 170 includes a check rod 180 that transmits power from the drive shoe 110 to a drive link, and a check block 190 that switches an engagement state between the drive shoe 110 and the check rod 180.

The check rod 180 is an elongated member having a longitudinal direction that matches the front-rear direction. The check rod 180 includes a rear end portion bent in such a way as to be displaced in the width direction from a different portion of the check rod 180. In the following description, a part included in the check rod 180 and extending in the front-rear direction is referred to also as a rod body 181, and the rear end portion of the check rod 180 is referred to also as a rear shoe 182. The check rod 180 includes a block biasing portion 183 that biases the check block 190, and a first sliding shaft 184 and a second sliding shaft 185 that each extend from the rear shoe 182 in the width direction. The check rod 180 is formed, for example, by coating a bendable metal plate with a resin material.

As illustrated in FIG. 8 and FIG. 9, the rod body 181 linearly extends similarly to the main rail 70. When the main rail 70 is slightly curved as in the first embodiment, it is preferable that the rod body 181 is also similarly curved. The rod body 181 has a section perpendicular to the longitudinal direction and having a rectangular shape, and has a lateral direction matching the width direction and a longitudinal direction matching the up-down direction.

The block biasing portion 183 functions as what is called leaf spring. The block biasing portion 183 is at a position near a distal end of the rod body 181, and is supported by a surface included in the rod body 181 and facing outward in the width direction. The block biasing portion 183 includes a proximal end that is a fixed end, and a distal end that is a free end. In another embodiment, the block biasing portion 183 may be a torsion coil spring or another type of spring.

As illustrated in FIG. 10 and FIG. 11, the rear shoe 182 extends rearward from a rear end of the rod body 181 while being bent in the width direction. In a front view from the a front side of the check rod 180, the rear shoe 182 is located on a width-direction inner side of the rod body 181.

The first sliding shaft 184 and the second sliding shaft 185 each extend from the rear shoe 182 outward in the width direction. Namely, the first sliding shaft 184 and the second sliding shaft 185 each includes a proximal end that is a fixed end, and a distal end that is a free end. In a side view from the width direction, the first sliding shaft 184 is located on a rear side of and on an upper side of the second sliding shaft 185. An outer diameter of the first sliding shaft 184 is smaller than an outer diameter of the second sliding shaft 185. In the first embodiment, the first sliding shaft 184 does not include a roller 186, and meanwhile, the second sliding shaft 185 includes the roller 186. The roller 186 is made of elastomer such as rubber and resin. An elastic modulus of the roller 186 is preferably lower than the elastic modulus of the covering portion 152 of the rear link 150.

As illustrated in FIG. 8 and FIG. 9, the check block 190 includes a block body 191, a sandwiching portion 192 that extends from a distal end of the block body 191 while being bent, and an engagement shaft 193 that extends from the block body 191 in the width direction.

A part included in the check block 190 and excluding the engagement shaft 193 is formed, for example, by coating a metal plate with a resin material. In a side view from the width direction, the block body 191 has an ellipse shape. The sandwiching portion 192 extends from the distal end of the block body 191 inward in the width direction, and then extends along the block body 191. A gap formed between the sandwiching portion 192 and the block body 191 is slightly larger than a thickness of a distal end portion of the check rod 180. The engagement shaft 193 extends from an intermediate portion of the block body 191 outward in the width direction. The engagement shaft 193 has a cylindrical shape.

A proximal end portion of the block body 191 is supported by the distal end portion of the check rod 180 via a coupling pin that has an axial direction matching the width direction. Thus, the check block 190 is rotatable, relative to the rod body 181, around the axis extending in the width direction. The block body 191 is biased downward by the block biasing portion 183 of the check rod 180, on a width-direction inner side of the rod body 181. The sandwiching portion 192 sandwiches the distal end portion of the check rod 180 in the width direction.

As illustrated in FIG. 4 and FIG. 5, the power transmission member 170 is accommodated in the first accommodation space 75 and the second accommodation space 76 of the main rail 70. Specifically, the rod body 181 of the check rod 180 is accommodated in the third guide groove 76c. A part of the rear shoe 182 of the check rod 180 is accommodated in the first guide groove 75a. Since the intermediate wall 73 that partitions the first accommodation space 75 and the second accommodation space 76 from each other does not exist at the rear end portion of the main rail 70, the rear shoe 182 of the check rod 180 is arranged in such a way as to extend from the first accommodation space 75 to the second accommodation space 76.

In the check rod 180, the first sliding shaft 184 contacts with the rear link 150 located at the tilted-down position, and the second sliding shaft 185 is located on a front side of the rear link 150 located at the tilted-down position. The first sliding shaft 184 presses the first sliding surface 156 of the rear link 150 from an upper side. Accordingly, in a state illustrated in FIG. 4 and FIG. 5, the rear link 150 is restricted from rotating from the tilted-down position. As described above, the link biasing portion 163 of the rear support portion 140 is compressed between the bottom wall 71 of the rail unit 60 and the rear link 150. In this regard, the first sliding shaft 184 sandwich the rear link 150 in cooperation with the link biasing portion 163. Here, it can also be said that the link biasing portion 163 biases, toward the first sliding shaft 184, the rear link 150 located at the tilted-down position.

At a position near a front end of the first accommodation space 75, the check block 190 is adjacent to the second sliding portion 112 of the drive shoe 110 in the width direction. As illustrated in FIG. 8, a distal end portion of the engagement shaft 193 of the check block 190 engages with the engagement groove 117 of the drive shoe 110. In other words, the check block 190 couples the drive shoe 110 and check rod 180 to each other. Thus, in the state illustrated in FIG. 4 and FIG. 5, when the drive shoe 110 moves rearward, the power transmission member 170 moves rearward together with the drive shoe 110. As illustrated in FIG. 8, the check block 190 is biased by the block biasing portion 183. The engagement shaft 193 of the check block 190 contacts, from an upper side, with the insertion portion 83 of the inner cap 80 illustrated in FIG. 6, inside the rail unit 60.

### <Deflector 200>

As illustrated in FIG. 1, the deflector 200 is an apparatus that adjusts an airflow around the roof opening 25. The deflector 200 suppresses a wind noise generated at the time of vehicle traveling in a state where the movable panel 40 is moved to a fully opening position.

As illustrated in FIG. 2 and FIG. 3, the deflector 200 includes an arm support portion 201 fixed to the main rail 70, an arm 202 rotatably supported by the arm support portion 201, and a movable frame 203 supported by a distal end of the arm 202. The deflector 200 includes an arm biasing portion 204 that biases the arm 202, a fixed frame 205 fixed to the front panel 23, and a screen 206 supported by the movable frame 203 and the fixed frame 205. The arm support portion 201, the arm 202, and the arm biasing portion 204 among the components of the deflector 200 are components arranged on each of both width-direction sides of the roof opening 25.

The arm 202 has a rod shape, and has a longitudinal direction perpendicular to the width direction. A proximal end portion of the arm 202 is supported by the arm support portion 201. A rotational axis of the arm 202 extends in the width direction. An upper surface of the arm 202 is a surface that slides on the holding portion 116 of the drive shoe 110.

The movable frame 203 and the fixed frame 205 each have a rod shape, and each have a longitudinal direction matching the width direction. A distal end portion of the arm 202 is connected to the movable frame 203. A position included in the movable frame 203 and at which the movable frame 203 is connected to the arm 202 is not an end portion of the movable frame 203, but a position displaced inward in the width direction from the end portion of the movable frame 203. In the first embodiment, a length of the movable frame 203 in the longitudinal direction is longer than an interval between the two arms 202 in the width direction, i.e., an interval between the two arm support portions 201 in the width direction.

The screen 206 is a band-shaped foldable member made of resin or cloth. The screen 206 is unfolded in a space on a front side of the roof opening 25, and is retracted in a folded state. In another embodiment, the screen 206 may be panel-shaped. An upper end of the screen 206 is supported by the movable frame 203 over the screen 206 in the width direction. Meanwhile, a lower end of the screen 206 is supported by the fixed frame 205 over the screen 206 in the width direction.

As illustrated in FIG. 2, the deflector 200 is arranged along a front edge and side edges of the roof opening 25. The arm support portion 201 is fixed to the bottom wall 71 of the main rail 70. Specifically, as illustrated in FIG. 3, the arm support portion 201 is fixed on a front side of a front end of the inner wall 72 of the main rail 70 and on a width-direction inner side of the intermediate wall 73 of the main rail 70. The arm biasing portion 204 is arranged between the arm 202 and the bottom wall 71 of the main rail 70. The arm biasing portion 204 biases the arm 202 in a direction in which the movable frame 203 is separated from the bottom wall 71 of the main rail 70.

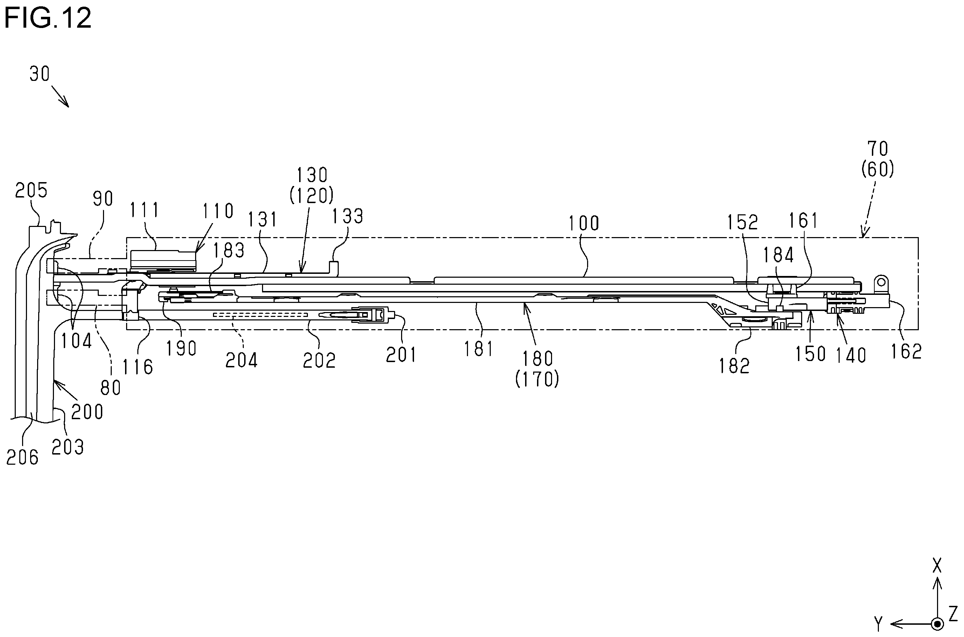

As illustrated in FIG. 12, in a plan view from an upper side, the arm 202 extends along the main rail 70. In a state illustrated in FIG. 12, the arm 202 is located alongside at least a part of the front link 130 in the width direction. The arm 202 is located in alignment with at least a part of the rear link 150 in the front-rear direction. The arm 202 and the rear link 150 are located on a width-direction inner side of the front link 130.

As illustrated in FIG. 3, when the movable panel 40 is located at a fully closing position, the arm 202 contacts with the holding portion 116 of the drive shoe 110 from a lower side. Thus, the arm 202 is restricted from rotating in a direction of unfolding the screen 206, based on biasing force of the arm biasing portion 204. In other words, the screen 206 has been retracted.

The sunroof apparatus 30 according to the first embodiment operates the movable panel 40 by movement of the drive shoe 110 in the front-rear direction. Specifically, when the drive shoe 110 moves rearward, the movable panel 40 is opened, and when the drive shoe 110 moves forward, the movable panel 40 is closed. In the following description, the position of the movable panel 40 at which the movable panel 40 fully closes the roof opening 25 is referred to as "fully closing position", and the position of the movable panel 40 at which the movable panel 40 fully opens the roof opening 25 is referred to as "fully opening position". A position at which a rear end portion of the movable panel 40 is moved higher than the fully closing position is referred to as "tilt-up position", and a position at which a front end portion of the movable panel 40 is moved higher than the tilt-up position is referred to as "lift-up position".

Further, a position of the drive shoe 110 at which the drive shoe 110 moves the movable panel 40 to the fully closing position is referred to as a "full-closing association position", and a position of the drive shoe 110 at which the drive shoe 110 moves the movable panel 40 to the fully opening position is referred to as "full-opening association position". A position of the drive shoe 110 at which the drive shoe 110 moves the movable panel 40 to the tilt-up position is referred to as the "tilt-up association position", and a position of the drive shoe 110 at which the drive shoe 110 moves the movable panel 40 to the lift-up position is referred to as the "lift-up association position". In a movement range of the drive shoe 110, the most forward position is the full-closing association position, and the most rearward position is the full-opening association position. The tilt-up association position and the lift-up association position are positions between the full-closing association position and the full-opening association position.

### <Effects of First Embodiment>

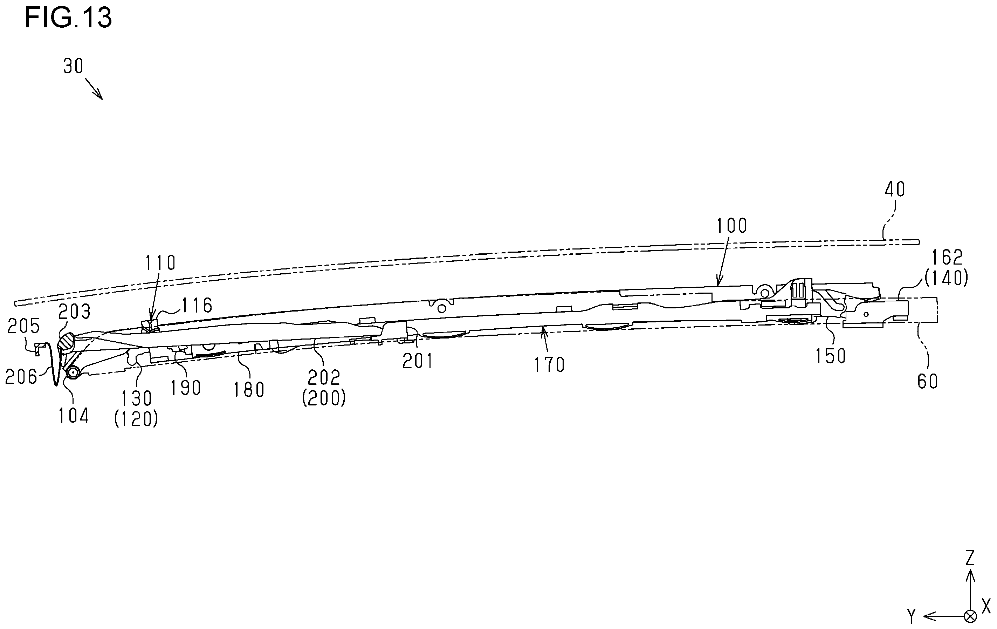

With reference to FIG. 13 to FIG. 25, the following describes effects when the movable panel 40 is opened in the sunroof apparatus 30.

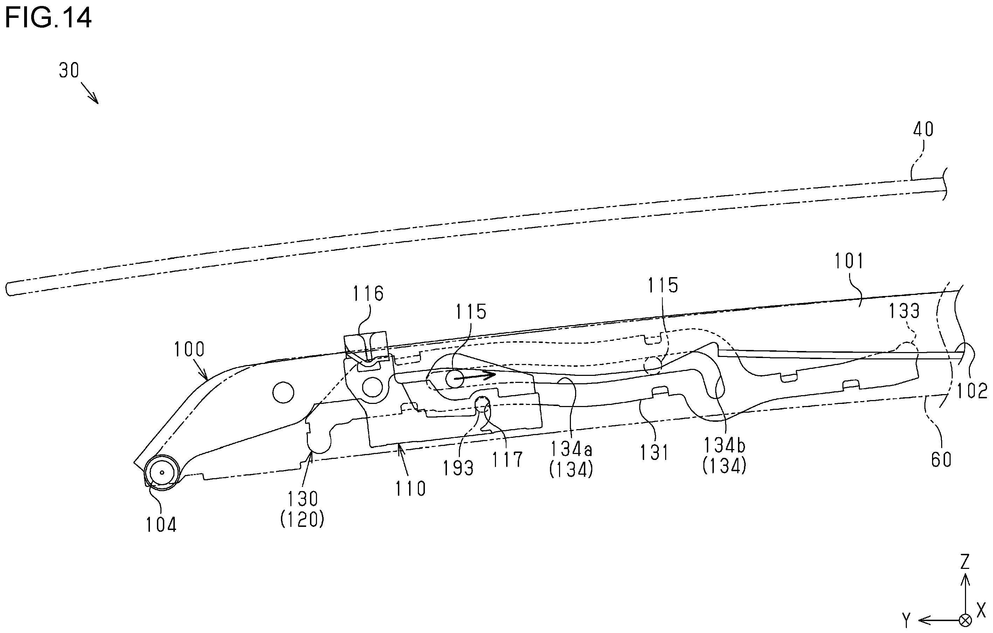

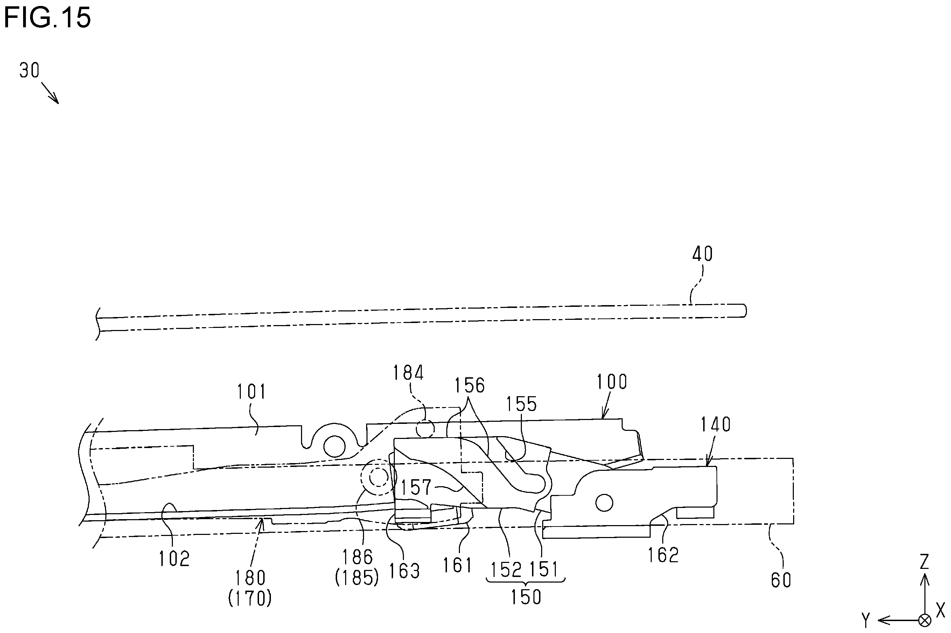

In a state illustrated in FIG. 13, the drive shoe 110 is located at the full-closing association position. As illustrated in FIG. 14, when the drive shoe 110 is located at the full-closing association position, the front link 130 is at the most forward position in the front-rear direction, and is tilted most forward. As illustrated in FIG. 15, the rear link 150 is located at the tilted-down position of being most tilted most forward. As a result, as illustrated in FIG. 13, the support bracket 100 is at the most forward position in the front-rear direction, and is moved most downward. Accordingly, the movable panel 40 is located at the fully closing position.

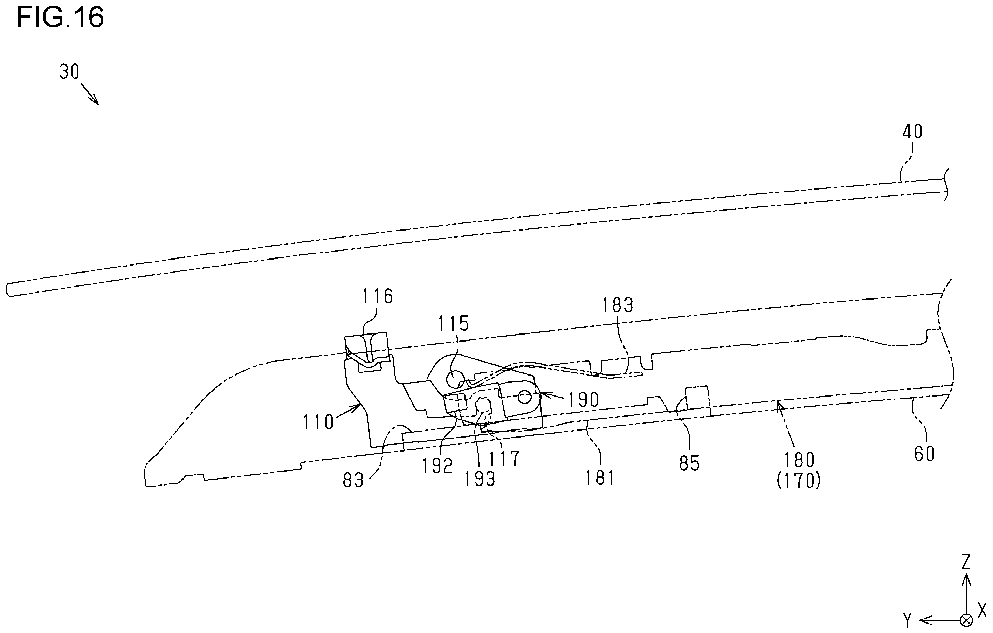

As illustrated in FIG. 16, when the drive shoe 110 is located at the full-closing association position, the drive shoe 110 and the check block 190 are located in such a way as to overlap with each other in the width direction. Specifically, the engagement shaft 193 of the check block 190 engages with the engagement groove 117 of the drive shoe 110. Namely, the drive shoe 110 is coupled to the check rod 180 via the check block 190. In other words, the check rod 180 is in a state of being movable together with the drive shoe 110.

As illustrated in FIG. 13, the holding portion 116 of the drive shoe 110 contacts with a part in the arm 202 and near the distal end of the arm 202. Thus, the arm 202 is restricted from standing up, and the screen 206 is retracted between the front panel 23 and the movable panel 40.

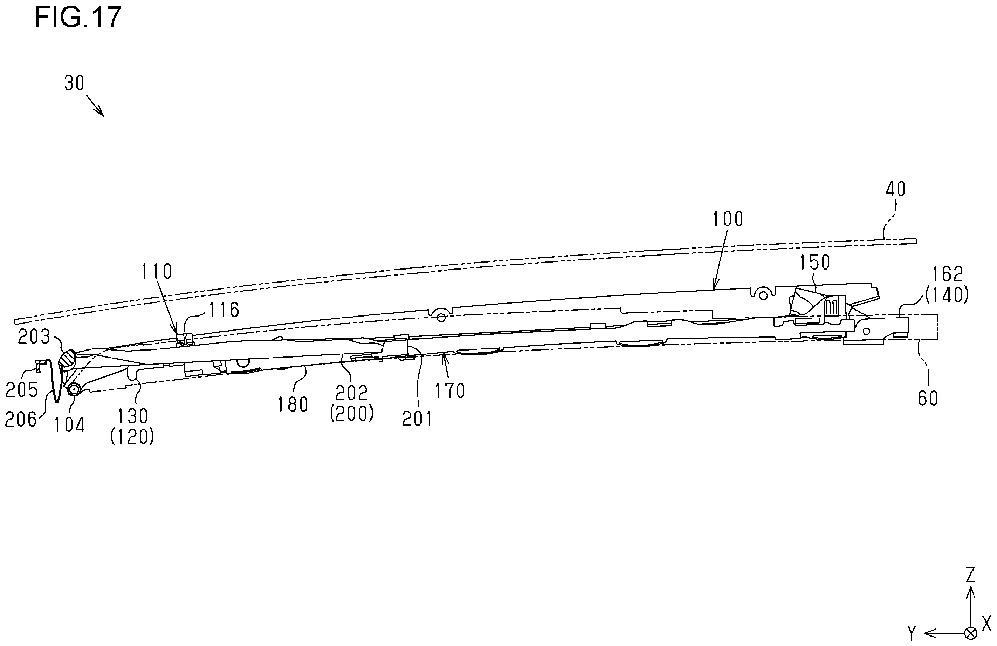

As illustrated in FIG. 17, when the drive shoe 110 moves rearward from the full-closing association position, power of the drive shoe 110 is transmitted only to the rear link 150 out of the front link 130 and the rear link 150. Namely, a posture of the rear link 150 changes while a position and a posture of the front link 130 do not substantially change.

As illustrated in FIG. 14, the first guide hole 134a of the front link 130 extends in the movement direction of the drive shoe 110. Thus, as illustrated by the solid-line arrow in FIG. 14, when the drive shoe 110 moves rearward from the full-closing association position, the guide shaft 115 of the drive shoe 110 moves along the first guide hole 134a of the front link 130. Thus, power of the drive shoe 110 is not substantially transmitted to the front link 130, and a position and a posture of the front link 130 do not substantially change. Since the engagement protrusion 132 of the front link 130 illustrated in FIG. 8 engages with the restriction portion 94 of the outer cap 90 illustrated in FIG. 6, the front link 130 is less likely to be moved rearward.

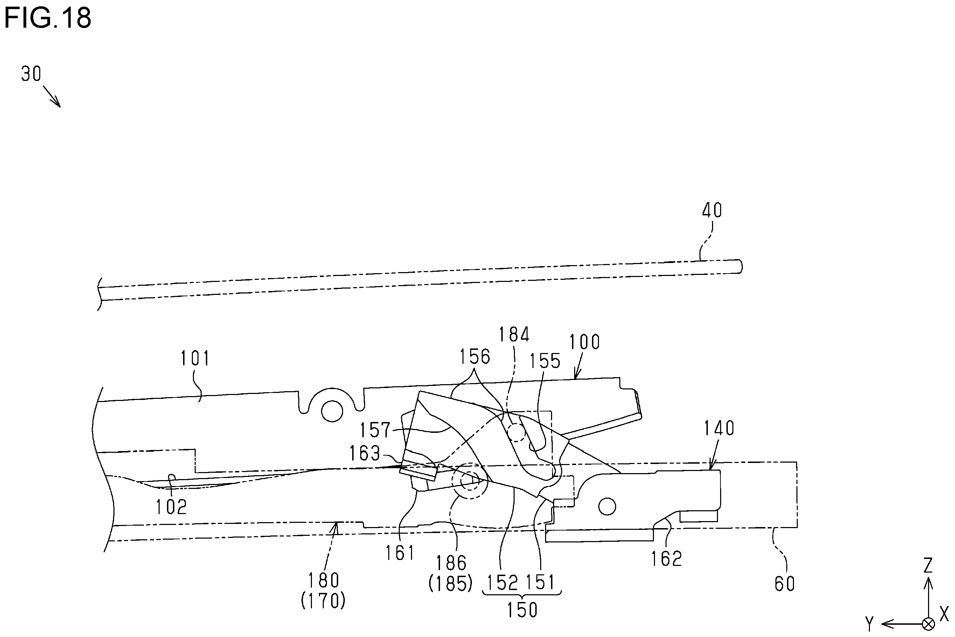

As illustrated in FIG. 16, the engagement shaft 193 of the check block 190 engages with the engagement groove 117 of the drive shoe 110. Thus, when the drive shoe 110 moves rearward from the full-closing association position, the power transmission member 170 moves rearward together with the drive shoe 110. Then, as illustrated in FIG. 18, the first sliding shaft 184 and the second sliding shaft 185 of the check rod 180 push the first sliding surface 155 and the second sliding surface 157 of the rear link 150 rearward, respectively, and thereby, the rear link 150 rotates from the tilted-down position toward the standing position. Here, the first sliding shaft 184 pushes the first sliding surface 155 rearward while sliding on the first sliding surface 155, and the roller 186 of the second sliding shaft 185 pushes the second sliding surface 157 rearward while rolling on the second sliding surface 157. In the first embodiment, the rolling is assumed to be one mode of sliding.

A state in which power of the drive shoe 110 is transmitted only to the rear link 150 out of the front link 130 and the rear link 150 is kept until the drive shoe 110 reaches the tilt-up association position. Namely, until the drive shoe 110 reaches the tilt-up association position, a posture of the rear link 150 changes while a position and a posture of the front link 130 do not substantially change.

As illustrated in FIG. 17, when the drive shoe 110 moves rearward from the full-closing association position, the holding portion 116 of the drive shoe 110 and the arm 202 slide on each other. As a result, an engagement relation between the holding portion 116 and the arm 202 changes. However, the holding portion 116 restricts standing-up of the arm 202, and thus, the screen 206 is kept retracted.

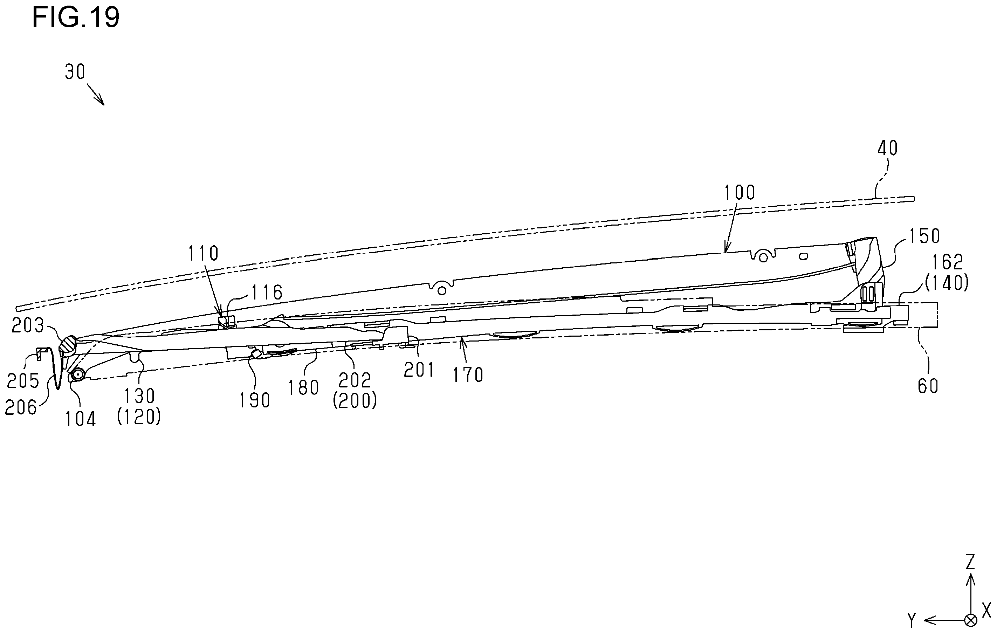

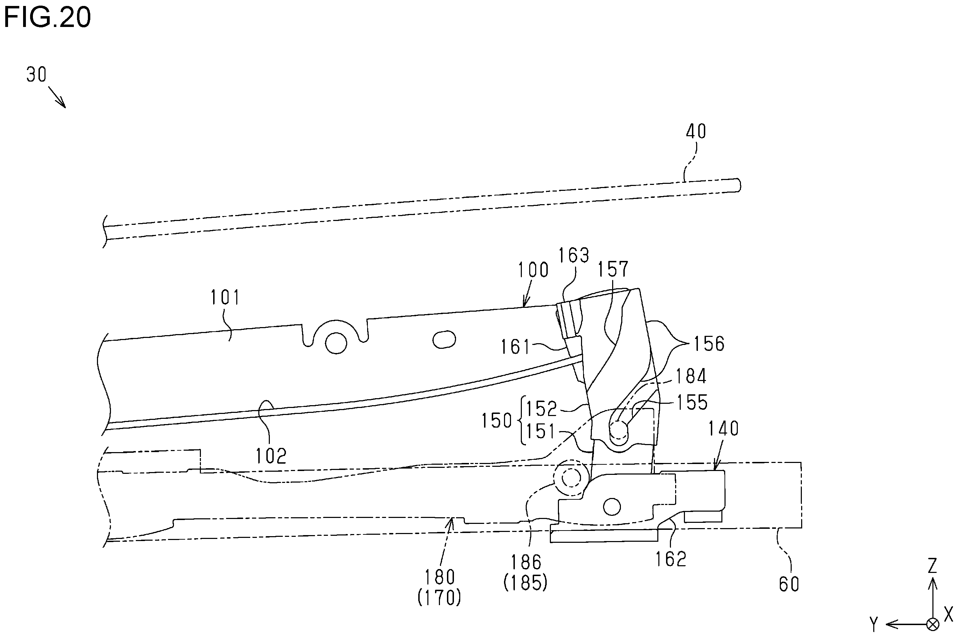

As illustrated in FIG. 19 and FIG. 20, when the drive shoe 110 moves as far as the tilt-up association position, the rear link 150 is moved to the standing position. Accordingly, when the drive shoe 110 moves from the full-closing association position to the tilt-up position, a rear end portion of the support bracket 100 is moved upward relative to the front end portion of the support bracket 100. As a result, the movable panel 40 is moved to the tilt-up position at which the rear end portion of the movable panel 40 is moved higher relative to the front end portion of the movable panel 40 than at the fully closing position.

When the rear link 150 is moved from the tilted-down position to the standing position, a mode of sliding between the two sliding shafts 184 and 185 and the two sliding surfaces 155 and 157 changes in the order of a first sliding mode, a second sliding mode, and a third sliding mode described in the following. The first sliding mode is a state in which the first sliding shaft 184 does not slide on the first sliding surface 155, while the second sliding shaft 185 slides on the second sliding surface 157. The second sliding mode is a state in which the first sliding shaft 184 and the second sliding shaft 185 slide on the first sliding surface 155 and the second sliding surface 157, respectively. The third sliding mode is a state in which the first sliding shaft 184 slides on the first sliding surface 155 while the second sliding shaft 185 does not slide on the second sliding surface 157. Accordingly, as illustrated in FIG. 20, when the rear link 150 is moved to the standing position, the first sliding shaft 184 contacts with the first sliding surface 155, but the second sliding shaft 185 is separated from the second sliding surface 157.

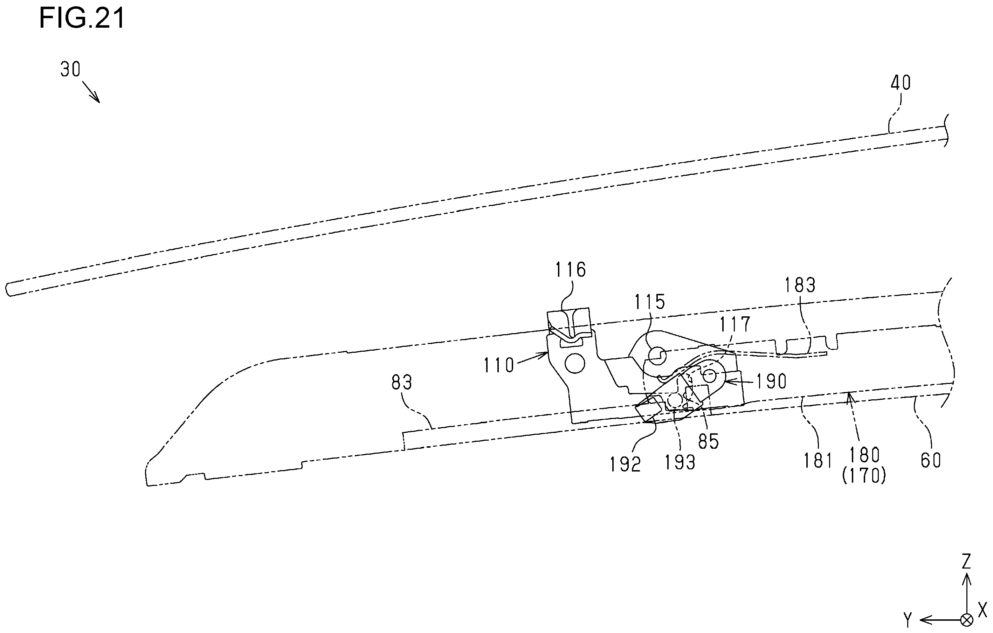

As illustrated in FIG. 19 and FIG. 21, when the drive shoe 110 moves to the tilt-up association position, a mode of engagement between the drive shoe 110 and the check block 190 changes. Specifically, the engagement shaft 193 of the check block 190 disengages from the engagement groove 117 of the drive shoe 110.

As illustrated in FIG. 16, when the drive shoe 110 moves from the full-closing association position to a position just before the tilt-up association position, the check block 190 slides on the insertion portion 83 of the rail unit 60. In other words, the check block 190 contacts with the insertion portion 83 of the rail unit 60, and thereby, rotation based on biasing force of the block biasing portion 183 is restricted. In contrast to this, as illustrated in FIG. 21, when the drive shoe 110 moves to the tilt-up association position, the engagement concave portion 85 of the rail unit 60 is located under the engagement shaft 193 of the check block 190. Thus, the check block 190 rotates relative to the check rod 180, based on the biasing force of the block biasing portion 183. As a result, the engagement shaft 193 of the check block 190 engages with the engagement concave portion 85 of the rail unit 60, and meanwhile, disengages from the engagement groove 117 of the drive shoe 110. In other words, an engagement target of the check block 190 changes from the drive shoe 110 to the rail unit 60, and the check block 190 is moved from a connection position to a disconnection position. Accordingly, power of the drive shoe 110 is not transmitted to the check rod 180 when the drive shoe 110 moves rearward after the check block 190 is moved to the disconnection position, i.e., when the drive shoe 110 moves rearward from the tilt-up association position.

When the engagement shaft 193 of the check block 190 engages with the engagement concave portion 85 of the rail unit 60, the check rod 180 cannot be moved in the front-rear direction. Thus, a state in which the rear link 150 is moved to the standing position is kept. In other words, a posture of the rear link 150 in which power transmission from the drive shoe 110 is cut off is suppressed from being unexpectedly changed.

When the drive shoe 110 moves rearward from the tilt-up association position, power of the drive shoe 110 is transmitted only to the front link 130 out of the front link 130 and the rear link 150. Namely, a posture of the front link 130 changes while a posture of the rear link 150 does not change.

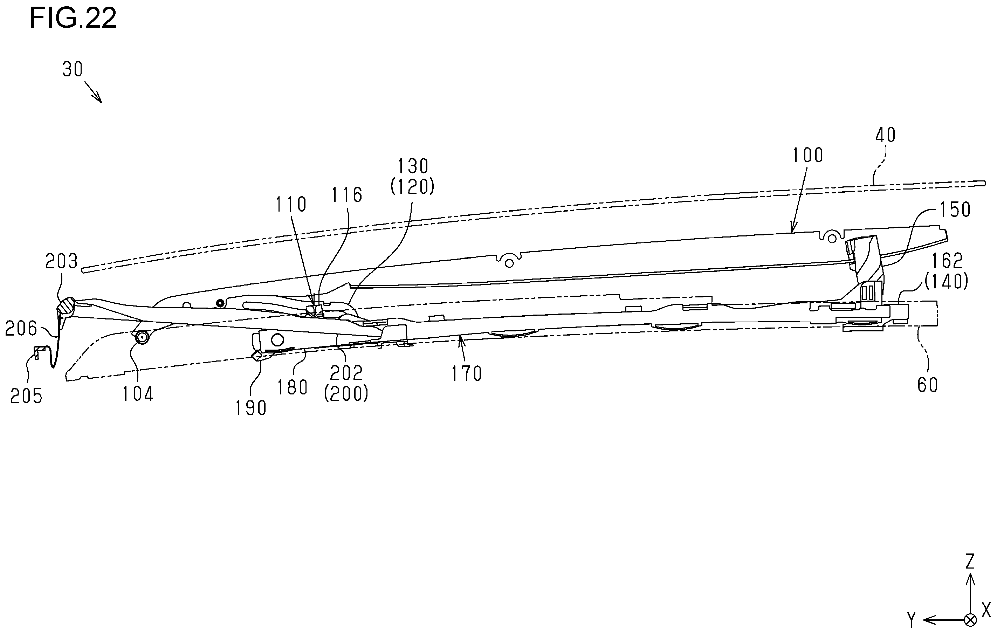

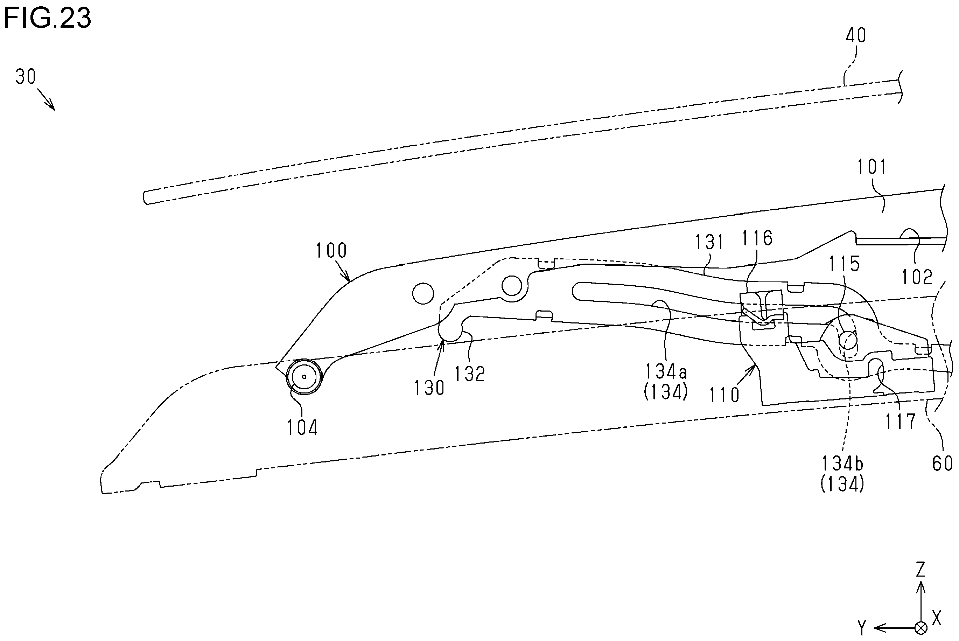

As illustrated by the two-dot chain line in FIG. 14, when the drive shoe 110 is located at the tilt-up association position, the guide shaft 115 of the drive shoe 110 is located close to the terminal end of the first guide hole 134a of the front link 130. In other words, the guide shaft 115 of the drive shoe 110 is located close to the start end of the second guide hole 134b of the front link 130. Thus, when the drive shoe 110 moves rearward from the tilt-up association position, the guide shaft 115 of the drive shoe 110 slides on a wall surface of the second guide hole 134b of the front link 130. As a result, as illustrated in FIG. 22 and FIG. 23, the front link 130 rotates around the axis of the sliding protrusion 133 in such a way that the distal end portion of the front link 130 is moved upward. The reason why the front link 130 is rotated without being moved rearward at this time is that the engagement protrusion 132 of the front link 130 illustrated in FIG. 8 engages with the restriction portion 94 of the outer cap 90 illustrated in FIG. 6. The engagement between the engagement protrusion 132 of the front link 130 and the restriction portion 94 of the outer cap 90 is released by rotation of the front link 130.

As illustrated in FIG. 22 and FIG. 23, when the drive shoe 110 moves as far as the lift-up association position, rotation of the front link 130 is completed. When the front link 130 rotates, the support shaft 104 of the support bracket 100 is moved along the second guide grooves 81b and 91b of the inner cap 80 and the outer cap 90. Thus, the front end portion of the support bracket 100 is moved upward relative to the rear end portion of the support bracket 100. As a result, the movable panel 40 is moved to the lift-up position at which the front end portion of the movable panel 40 is moved higher than at the tilt-up position.

As illustrated in FIG. 22, when the drive shoe 110 moves as far as the lift-up association position, the holding portion 116 of the drive shoe 110 and the arm 202 slide on each other. As a result, in the arm 202, a position of contacting with the holding portion 116 changes from a position closer to the distal end to a position closer to the proximal end. Thus, when the drive shoe 110 moves rearward in the vicinity of the lift-up association position, the arm 202 gradually rotates in the direction of unfolding the screen 206.

When the drive shoe 110 moves rearward from the lift-up association position, power of the drive shoe 110 is transmitted only to the front link 130 out of the front link 130 and the rear link 150. Namely, the front link 130 is moved rearward while a posture of the rear link 150 does not change.

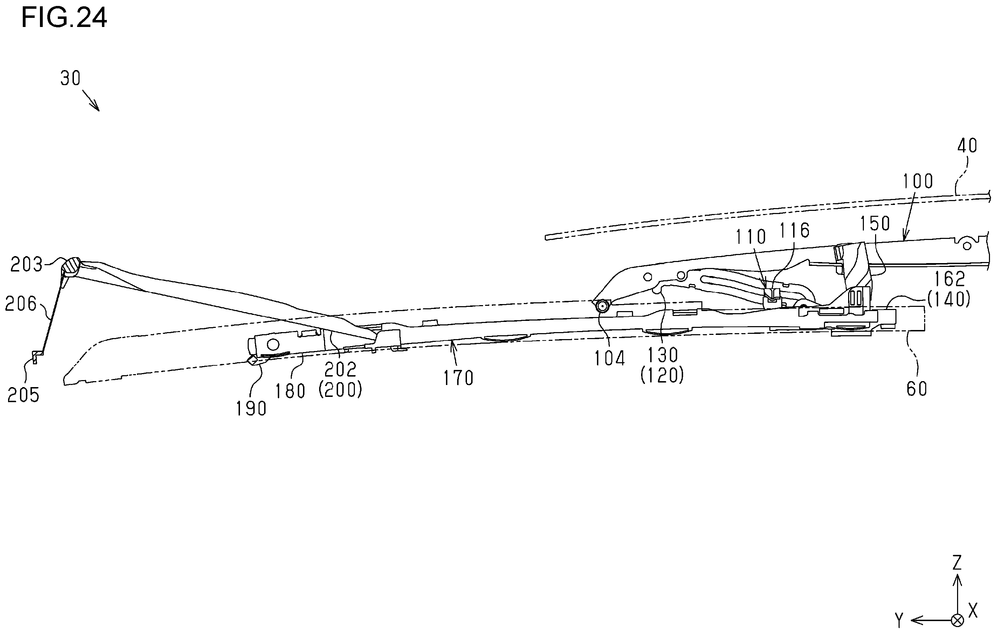

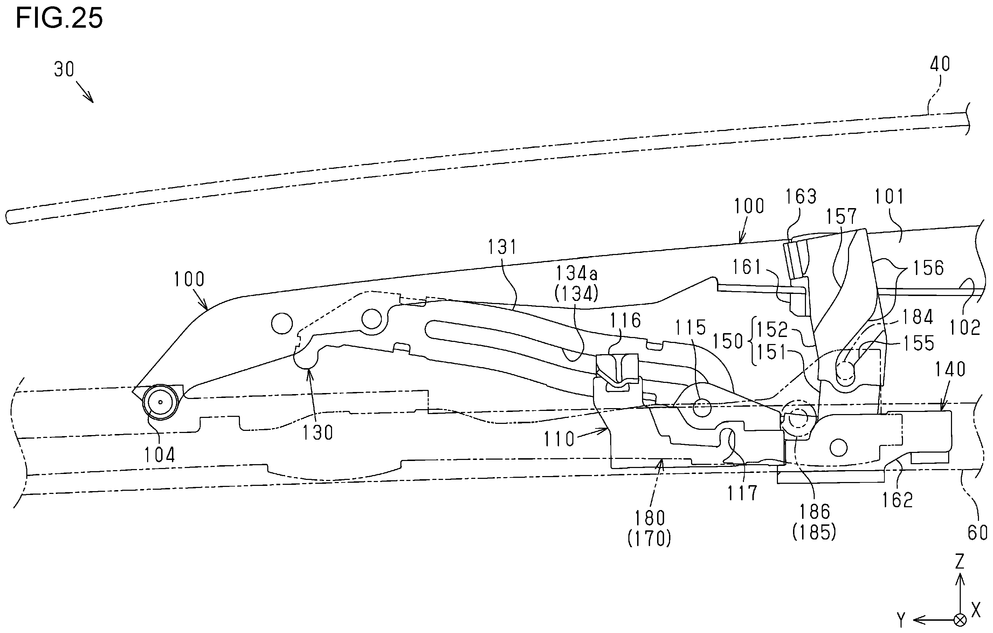

As illustrated in FIG. 24 and FIG. 25, when the drive shoe 110 moves rearward from the lift-up association position, the front link 130 is moved rearward together with the drive shoe 110. At this time, the guide shaft 115 of the drive shoe 110 does not move relative to the front link 130, and thus, a posture of the front link 130 does not change. Accordingly, accompanying the rearward movement of the drive shoe 110, the support bracket 100 is moved rearward while keeping a posture thereof. At this time, the support shaft 104 of the support bracket 100 slides on the second guide groove 76b of the main rail 70, and the lower flange 103 of the support bracket 100 slides on the slider 161.

When the drive shoe 110 moves rearward from the lift-up association position, the holding portion 116 of the drive shoe 110 separates from the arm 202. As a result, the screen 206 is unfolded.

As illustrated in FIG. 24, when the drive shoe 110 reaches the full-opening association position, the movable panel 40 is moved to the fully opening position. At this time, as illustrated in FIG. 25, the rear end portion of the drive shoe 110 and the rear end portion of the front link 130 overlap with the rear support portion 140 in the width direction.

The above description is made on the situation in which the movable panel 40 is opened from the fully closing position to the fully opening position in the sunroof apparatus 30, but substantially the same applies to a case where the movable panel 40 is closed from the fully opening position to the fully closing position. The following briefly describes effects of the case where the movable panel 40 is closed in the sunroof apparatus 30.

When the movable panel 40 is closed from the fully opening position, the drive shoe 110 moves forward from the full-opening association position. When the drive shoe 110 moves from the full-opening association position to the lift-up association position, the front link 130 is moved forward together with the drive shoe 110. As a result, the support bracket 100 is moved forward, and the movable panel 40 is moved from the fully opening position to the lift-up position. Before the drive shoe 110 reaches the lift-up association position, the holding portion 116 of the drive shoe 110 starts to push down the arm 202 of the deflector 200. Thus, before the drive shoe 110 reaches the lift-up association position, the screen 206 starts to be retracted.

When the drive shoe 110 moves from the lift-up association position to the tilt-up association position, an engagement target of the guide shaft 115 of the drive shoe 110 changes from the second guide hole 134b of the front link 130 to the first guide hole 134a. Thus, the front link 130 is rotated in such a way that the distal end of the front link 130 is moved downward. As a result, the distal end portion of the support bracket 100 is moved downward, and the movable panel 40 is moved from the lift-up position to the tilt-up position.

When the drive shoe 110 moves forward from the tilt-up association position, an engagement target of the engagement shaft 193 of the check block 190 changes from the engagement concave portion 85 of the rail unit 60 to the engagement groove 117 of the drive shoe 110. In other words, the check block 190 is moved from the disconnection position to the connection position. This is because the engagement shaft 193 of the check block 190 slides on the wall surface of the engagement groove 117 of the drive shoe 110, thereby causing the check block 190 to rotate against the biasing force of the block biasing portion 183. Specifically, this is because the engagement shaft 193 is guided to a deep part of the engagement groove 117, thereby causing the check block 190 to rotate. Thus, when the drive shoe 110 moves forward from the tilt-up association position, the drive shoe 110 is coupled to the check rod 180 via the check block 190.

In a situation where the drive shoe 110 is coupled to the check rod 180, when the drive shoe 110 moves to the full-closing association position, the check rod 180 is moved forward together with the drive shoe 110. At this time, the first sliding shaft 184 of the check rod 180 pushes the first sliding surface 156 of the rear link 150 forward, thereby causing the rear link 150 to move from the standing position to the tilted-down position. When the movable panel 40 is closed, the first sliding shaft 184 pushes the rear link 150 forward, but the second sliding shaft 185 does not push the rear link 150 forward, differently from the case where the movable panel 40 is opened.

When the drive shoe 110 reaches the full-closing association position, the rear link 150 is moved to the tilted-down position. As a result, the rear end portion of the support bracket 100 is moved downward, and the movable panel 40 is moved to the fully closing position.

### <Advantageous Effects of First Embodiment>

(1-1) The sunroof apparatus 30 switches a state of power transmission from the drive shoe 110 to the check rod 180 by movement of the check block 190 between the connection position and the disconnection position. In other words, the sunroof apparatus 30 does not use deformation of the check rod 180 in order to switch a state of power transmission from the drive shoe 110 to the check rod 180. Accordingly, because of the point that external force is suppressed from acting on the deformed check rod 180, stress concentration on the check rod 180 and buckling of the check rod 180 are less likely to occur. Accordingly, the sunroof apparatus 30 can enhance durability of the check rod 180.

(1-2) When the drive shoe 110 supports the check block 190, a shape of the rail unit 60 needs to be devised in such a way that the check block 190 moving together with the drive shoe 110 does not interfere with the rail unit 60. In this regard, according to the sunroof apparatus 30, the check rod 180 supports the check block 190, and thus, a shape of the rail unit 60 can be simplified. Further, the sunroof apparatus 30 can switch a position of the check block 190, depending on a direction in which the drive shoe 110 moves.

(1-3) When the drive shoe 110 moves between the full-closing association position and the tilt-up association position, the engagement shaft 193 of the check block 190 engages with the engagement groove 117 of the drive shoe 110, thereby coupling the drive shoe 110 and the check rod 180 to each other. Meanwhile, when the drive shoe 110 moves between the tilt-up association position and the full-opening association position, the engagement shaft 193 of the check block 190 engages with the engagement concave portion 85 of the rail unit 60, thereby release the coupling between the drive shoe 110 and the check rod 180. Thus, the engagement shaft 193 of the check block 190 functions as a part that engages with the drive shoe 110, and also functions as a part that engages with the rail unit 60. Thus, according to the sunroof apparatus 30, a structure of the check block 190 can be simplified because of the point that the check block 190 does not need to be provided with two engagement shafts.

(1-4) In the sunroof apparatus 30, the check block 190 includes the sandwiching portion 192 that sandwiches the front end portion of the check rod 180 in the width direction. Thus, when the check block 190 is moved between the connection position and the disconnection position, the check block 190 is less likely to be displaced in the width direction relative to the check rod 180. Thus, the sunroof apparatus 30 can smoothly move the check block 190 between the connection position and the disconnection position.

(1-5) When the movable panel 40 is operated between the lift-up position and the fully opening position, the front link 130 is moved along the rail unit 60. At this time, an amount of movement of the front link 130 in the front-rear direction can be increased since the front link 130 and the rear link 150 are located off each other in the width direction. Since at least a part of the rear link 150 and the arm 202 of the deflector 200 are located in such a way as to overlap with each other in the width direction, an area occupied by the components of the sunroof apparatus 30 becomes smaller in the width direction. Accordingly, the sunroof apparatus 30 allows the roof opening 25 to be set larger.

(1-6) For example, in some cases such as a case where four corners of the roof opening 25 are rounded in a plan view in the up-down direction, a length of the roof opening 25 in the width direction becomes shorter toward a rear side. In this case, a component that is among the components of the sunroof apparatus 30 and that is operated near the rear end of the roof opening 25 is preferably arranged away from the side ends of the roof opening 25. In this regard, in the sunroof apparatus 30, the rear link 150 operated on a rear side of the front link 130 is arranged on a width-direction inner side of the front link 130. Accordingly, the sunroof apparatus 30 allows the rear link 150 to be arranged on a more rear side while avoiding interference between the rear link 150 and the rear panel 24 or the weather strip 26. Thus, an amount of rearward movement of the front link 130 when the movable panel 40 is opened becomes larger. As a result, when the movable panel 40 is moved to the fully opening position, a part that is included in the roof opening 25 and that is not covered by the movable panel 40 becomes larger. Specifically, an interval in the front-rear direction between the front end of the roof opening 25 and the front end of the movable panel 40 located at the fully opening position becomes longer.

(1-7) The sunroof apparatus 30 can retract the screen 206 by the holding portion 116 of the drive shoe 110. Here, the holding portion 116 moves along the rail unit 60, and thus, the sunroof apparatus 30 can suppress excessive rotation of the arm 202 at the time of retracting the screen 206. In other words, the sunroof apparatus 30 allows easy management of a position of the movable frame 203 at the time of retracting the screen 206. As compared with a configuration in which the arm 202 is held by the movable panel 40, the deflector 200 and other drive components are less likely to protrude downward. Thus, the sunroof apparatus 30 enables a thickness of the entire apparatus in the up-down direction to be reduced.

(1-8) The sunroof apparatus 30 allows relatively free selection of a shape of the covering portion 152 because of the point that the covering portion 152 is made of a resin material. Thus, the sunroof apparatus 30 allows the covering portion 152 to be formed into a shape depending on an empty space around the rear link 150 while the sliding surfaces 155 to 157 are provided in the covering portion 152. Thus, the sunroof apparatus 30 allows effective use of the empty space around the rear link 150.

In the rear link 150, the sliding surfaces 155 to 157 are provided in the covering portion 152 that covers the base portion 151. Specifically, in the rear link 150, the sliding surfaces 155 to 157 of the covering portion 152 are located off the base portion 151 in the width direction. Thus, the sunroof apparatus 30 allows the sliding surfaces 155 to 157 to be easily provided in the rear link 150 than in a comparative example in which the sliding surfaces 155 to 157 are provided in the base portion 151 having a high elastic modulus and difficult to process. Thus, the sunroof apparatus 30 allows a configuration of the rear link 150 to be simplified. Further, sliding holes or sliding grooves for forming the sliding surfaces 155 to 157 do not need to be provided in the base portion 151 of the rear link 150. Therefore, the sunroof apparatus 30 can suppress a size of the rear link 150 from being increased due to providing the sliding holes or the sliding grooves in the base portion 151, and can suppress a size of the rear link 150 from being increased accompanying strength securing of the rear link 150.

(1-9) In the rear link 150, the first sliding surfaces 155 and 156 and the second sliding surface 157 are provided only on one side in the base portion 151 in the width direction. Thus, the sunroof apparatus 30 allows a thickness of the rear link 150 in the width direction to be set smaller than in a comparative example in which the sliding surfaces 155 to 157 are provided on both width-direction sides of the base portion 151.

(1-10) The rear link 150 at the tilted-down position compresses the link biasing portion 163. In other words, the rear link 150 at the tilted-down position is sandwiched between the link biasing portion 163 and the first sliding shaft 184. Thus, the rear link 150 is less likely to rattle at the tilted-down position. In other words, a posture of the rear link 150 is easily kept constant at the tilted-down position. Accordingly, the sunroof apparatus 30 can suppress rattling of the movable panel 40 located at the fully closing position.

(1-11) In the sunroof apparatus 30, the two sliding shafts 184 and 185 of the power transmission member 170 slide on the two sliding surfaces 155 and 157 of the rear link 150, respectively. Thus, the sunroof apparatus 30 allows the rear link 150 to be smoothly moved between the tilted-down position and the standing position. Specifically, at the beginning of standing the rear link 150 from the tilted-down position, the second sliding shaft 185 and the second sliding surface 157 are caused to slide on each other. Thus, a distance from the rotational center of the rear link 150 to a point at which force acts on the rear link 150 can be increased. In other words, at the beginning of standing the rear link 150 from the tilted-down position, the above-described distance can be longer than in a comparative example in which the first sliding shaft 184 and the first sliding surface 155 are caused to slide on each other. Thus, the moment of force acting on the rear link 150 becomes large, and the rear link 150 can be smoothly rotated at the beginning of standing the rear link 150 from the tilted-down position.

(1-12) When a manufacturing error occurs in the components of the sunroof apparatus 30, the following problem may occur under a situation in which the first sliding shaft 184 and the second sliding shaft 185 simultaneously slide on the first sliding surface 155 and the second sliding surface 157, respectively. In other words, at the time of moving the rear link 150 between the tilted-down position and the standing position, there is a possibility that an excessive load is applied to the rear link 150 and the power transmission member 170. In this regard, in the check rod 180, the second sliding shaft 185 includes the roller 186 having an elastic modulus smaller than that of the covering portion 152. Thus, the sunroof apparatus 30 can absorb a manufacturing error such as that described above by deforming the roller 186.

(1-13) When the first sliding shaft 184 of the power transmission member 170 slides on at least a part of the first sliding surfaces 155 and 156 in the covering portion 152 of the rear link 150, the first sliding shaft 184 is received in the first concave portion 153. When the first sliding shaft 184 of the power transmission member 170 is received in the first concave portion 153, the rear link 150 is unlikely to move even when external force acts on the rear link 150 via the movable panel 40 or the like. Specifically, the first sliding surfaces 155 and 156 of the rear link 150 contact with the first sliding shaft 184, thereby restricting movement of the rear link 150. Thus, the sunroof apparatus 30 can stabilize a posture of the rear link 150.

### <Modified Examples of First Embodiment>

The first embodiment can be modified and implemented as in the following. The first embodiment and the following modified examples can be implemented in combination with each other within a range in which a technical contradiction does not occur.
- In the rail unit 60, the main rail 70 may include a configuration corresponding to the engagement concave portion 85 of the inner cap 80.
- A positional relation among the support bracket 100, the drive shoe 110, the front support portion 120, the rear support portion 140, and the power transmission member 170 can be appropriately modified. For example, the front support portion 120 may be arranged on a width-direction inner side of the rear support portion 140 and the arm 202 of the deflector 200.
- The rear link 150 may include the first sliding surfaces 155 and 156 and the second sliding surfaces 157 on both width-direction sides. In this case, the check rod 180 preferably includes the first sliding shafts 184 and the second sliding shafts 185 that slide on the first sliding surfaces 155 and 156 and the second sliding surfaces 157 provided on both width-direction sides of the rear link 150.
- In the rear link 150, the base portion 151 may include a flange bent along the sliding surfaces 155 and 156. In this case, the covering portion 152 covers the flange of the base portion 151. According to this, rigidity of the rear link 150 can be enhanced.
- The link biasing portion 163 only needs to be able to bias, toward the standing position, the rear link 150 that has been moved to the tilted-down position. For example, the link biasing portion 163 may be installed on the bottom wall 71 of the main rail 70. The link biasing portion 163 may be a coil spring that biases the rear link 150 around the rotation axis of the rear link 150.
- In the first embodiment, the check rod 180 is configured in such a way as to support the check block 190, and the check block 190 is configured in such a way as to engage with the drive shoe 110 and thereby couple the drive shoe 110 and the check rod 180 to each other. In contrast to this, in the modified example, the drive shoe 110 may be configured in such a way as to support the check block 190. The check block 190 may be configured in such a way as to engage with the check rod 180 and thereby couples the drive shoe 110 and the check rod 180 to each other.
- The check rod 180 may includes, separately from each other, an engagement shaft that engages with the engagement groove 117 of the drive shoe 110 and an engagement shaft that engages with the engagement concave portion 85 of the rail unit 60.
- The check rod 180 may support the check block 190 in such a way as to be reciprocable in a certain direction, instead of supporting the check block 190 in such a way as to be rotatable.
- In the check rod 180, each of the first sliding shaft 184 and the second sliding shaft 185 may be provided with the roller 186. In the check rod 180, neither of the first sliding shaft 184 and the second sliding shaft 185 may be provided with the roller 186.
- The check rod 180 may include a single sliding shaft. In this case, the rear link 150 preferably includes a single sliding surface that slides on the single sliding shaft.

- In the deflector 200, when the screen 206 has a certain degree of rigidity, the deflector 200 does not need to include the movable frame 203. In this case, the arm 202 directly supports the screen 206 at the distal end of the arm 202.
   - When the drive shoe 110 does not include the holding portion 116, the movable panel 40 that is being closed may be caused to contact with the arm 202 of the deflector 200, and the screen 206 may be thereby retracted.
   - A length of the roof opening 25 in the width direction may become gradually shorter toward a rear side. In other words, the roof opening 25 may have a trapezoidal shape in a plan view from an upper side. In this case, cutting out the rear end portion of the outer wall 74 as in the main rail 70 of the first embodiment allows the main rail 70 to be arranged closer to the side panel 22. As a result, the roof opening 25 allows to be set larger.
   - The sunroof apparatus 30 may be configured in such a way that the movable panel 40 can be moved between the tilt-up position and the fully opening position without being moved via the lift-up position.

### (Second Embodiment)

Hereinafter, a second embodiment of a sunroof apparatus will be described with reference to the drawings. In the description of the second embodiment, the constituents common to those in the first embodiment are denoted by the same reference signs, and the description thereof will be omitted.

### <Sunroof Apparatus 30A>

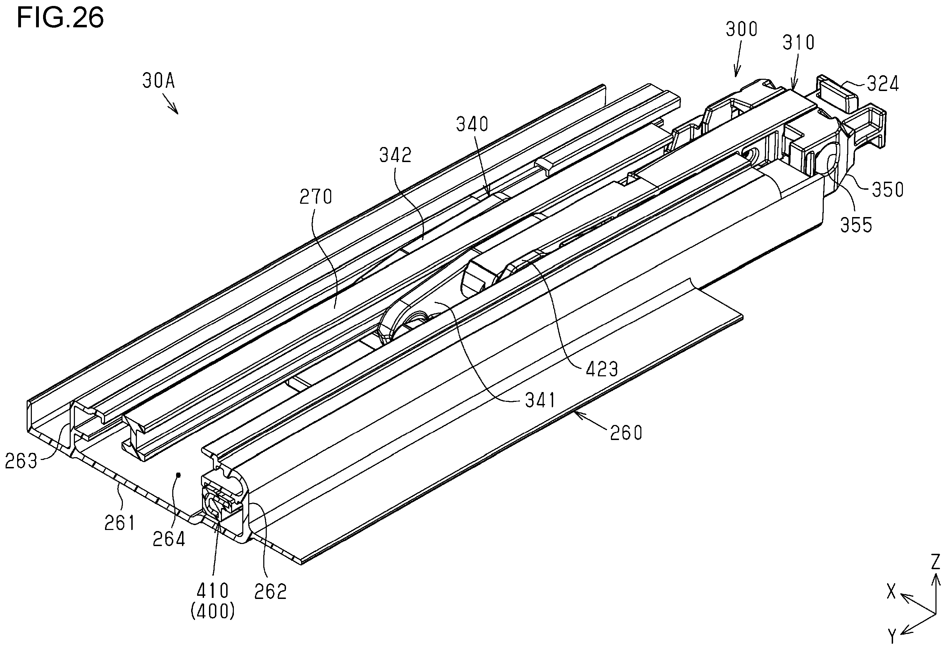

As illustrated in FIG. 26, the sunroof apparatus 30A includes a main rail 260, a support bracket 270, a rear support portion 300, and a power transmission member 400. The sunroof apparatus 30A includes the movable panel 40, the drive shoe 110, and the front support portion 120. Since a shape of the main rail 260 in the second embodiment is different from the shape of the main rail 70 of the first embodiment, shapes of the drive shoe 110 and the front support portion 120 are assumed to be shapes adapted to the second embodiment. A large part of the components of the sunroof apparatus 30A have left-and-right symmetrical shapes, and are arranged on right and left sides of the roof opening 25. Thus, in the following description, the components on a right side in the sunroof apparatus 30A will be described.

### <Main Rail 260>

As illustrated in FIG. 26, the main rail 260 has a longitudinal direction that matches the front-rear direction. In the second embodiment, the main rail 260 is slightly curved in such a way as to be convex upward in a side view in the width direction. Namely, the main rail 260 extending in the front-rear direction embraces not only a main rail 260 extending linearly but also a main rail 260 extending while being curved. The main rail 260 is formed, for example, by extruding a metal material such as aluminum. In the second embodiment, "rail unit" is configured in such a way as to include the main rail 260.

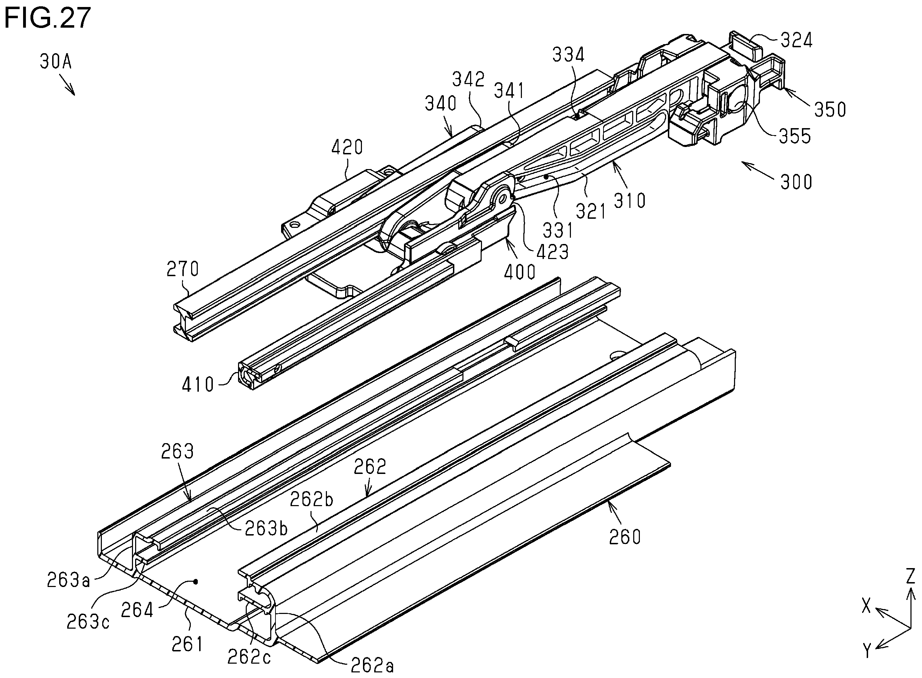

As illustrated in FIG. 27, the main rail 260 includes a bottom wall 261, an inner wall 262, and an outer wall 263. The main rail 260 includes an accommodation space 264 defined by the bottom wall 261, the inner wall 262, and the outer wall 263.

The bottom wall 261 has a flat plate shape, and has a longitudinal direction matching the front-rear direction, a plate thickness direction matching the up-down direction, and a lateral direction matching the width direction. The inner wall 262 extends from a position closer to a width-direction inner end of the bottom wall 261 than to a width-direction outer end of the bottom wall 261. The inner wall 262 includes a first inner wall 262a extending upward from the bottom wall 261, a second inner wall 262b extending outward in the width direction from a distal end of the first inner wall 262a, and a third inner wall 262c extending, on a lower side of the second inner wall 262b, outward in the width direction from the first inner wall 262a. The outer wall 263 extends from a position closer to the width-direction outer end of the bottom wall 261 than to the width-direction inner end of the bottom wall 261. The outer wall 263 includes a first outer wall 263a extending upward from the bottom wall 261, a second outer wall 263b extending inward in the width direction from a distal end of the first outer wall 263a, and a third outer wall 263c extending, on a lower side of the second outer wall 263b, inward in the width direction from the first outer wall 263a.

The main rail 260 is fixed to the vehicle body 20 in such a way as to be adjacent to the side panel 22. Thus, the main rail 260 extends in the front-rear direction on both width-direction sides of the roof opening 25.

### <Support Bracket 270>

As illustrated in FIG. 3, the support bracket 270 extends in the front-rear direction. A length of the support bracket 270 is preferably equivalent to a length of the panel bracket 42 of the movable panel 40. The support bracket 270 is formed, for example, by extruding or pressing a metal material. The support bracket 270 has an "I"-shaped section perpendicular to the longitudinal direction. In a state illustrated in FIG. 26, the support bracket 270 is accommodated in the accommodation space 264 of the main rail 260. The support bracket 270 is fixed to the panel bracket 42 of the movable panel 40. Thus, when the support bracket 270 moves relative to the main rail 260, the movable panel 40 moves together with the support bracket 270.

### <Rear Support Portion 300>

As illustrated in FIG. 26, the rear support portion 300 is accommodated in the accommodation space 264 of the main rail 260, at a position closer to a rear end of the main rail 260 than to a front end of the main rail 260. The rear support portion 300 supports the support bracket 270, on a rear side of the front support portion 120.

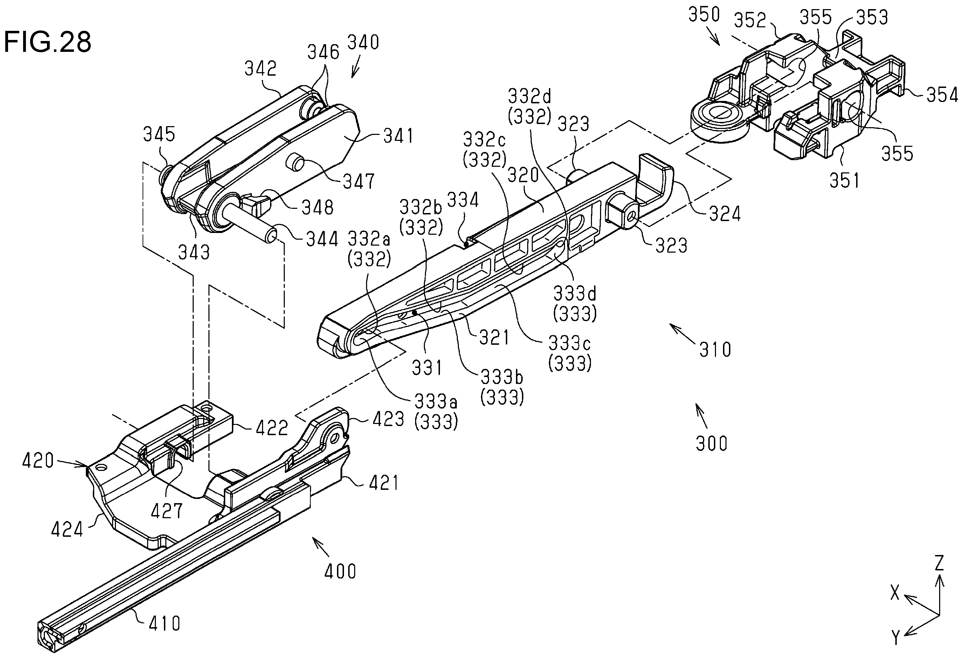

As illustrated in FIG. 28 to FIG. 30, the rear support portion 300 includes a first rear link 310, a second rear link 340, and a link support portion 350. In the second embodiment, "rear link" is configured in such a way as to include the first rear link 310 and the second rear link 340.

### <First Rear Link 310>

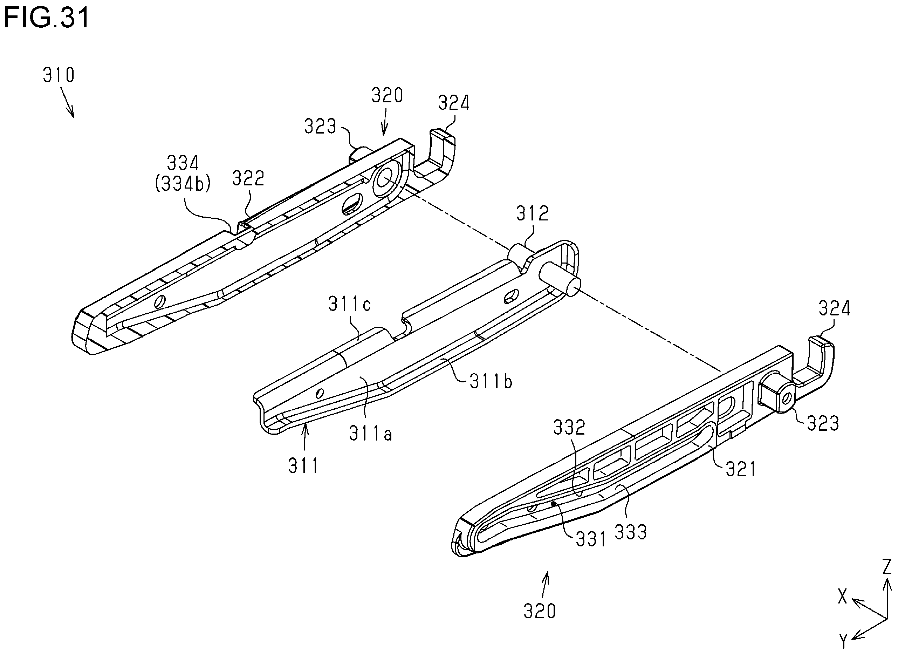

As illustrated in FIG. 28 to FIG. 30, in a side view in the width direction, the first rear link 310 has a rod shape, and has a longitudinal direction perpendicular to the width direction. In the following description, one end of the first rear link 310 in the longitudinal direction is referred to as a proximal end, and an opposite end of the first rear link 310 in the longitudinal direction is referred to as a distal end. As illustrated in FIG. 31, the first rear link 310 includes a core member 311 and a pin 312 that are each made of a metal material, and a covering portion 320 that is made of a resin material. In reality, the covering portion 320 is not configured by combining, in the width direction, two resin components configured as separate bodies as illustrated in FIG. 31.

The core member 311 includes a base portion 311a having a plate thickness direction matching the width direction, a lower flange 311b extending inward in the width direction from a lower end of the base portion 311a, and an upper flange 311c extending outward in the width direction from an upper end of the base portion 311a. The core member 311 may be formed, for example, by pressing a metal plate. A notch is provided at a center portion of the upper flange 311c in the longitudinal direction of the first rear link 310. In this regard, the upper flange 311c is divided into two parts in the longitudinal direction of the first rear link 310. The pin 312 has an axial direction matching a plate thickness direction of the base portion 311a. The pin 312 is fixed to the base portion 311a in a state of penetrating through the base portion 311a. Elastic moduli of the core member 311 and the pin 312 are higher than an elastic modulus of the covering portion 320.

The covering portion 320 covers the entire core member 311. The covering portion 320 includes a first rib 321, a second rib 322, two support shafts 323, and a hook 324. In one example, the covering portion 320 is formed by injecting liquid resin around the core member 311 and the pin 312 placed in a mold and then solidifying the liquid resin.

As illustrated in FIG. 28 and FIG. 31, the first rib 321 extends inward in the width direction from the base portion 311a of the core member 311. The first rib 321 is located off the base portion 311a of the core member 311 inward in the width direction. A part of the first rib 321 covers the lower flange 311b of the core member 311.

As illustrated in FIG. 28, the first rib 321 defines a first sliding groove 331. The first sliding groove 331 is concave toward the base portion 311a in the width direction. The first sliding groove 331 extends in such a way as to be along the longitudinal direction of the first rear link 310. In the following description, an end portion that is out of both end portions of the first sliding groove 331 in the extending direction thereof and that is closer to a distal end of the first rear link 310 is referred to as a first end, and an end portion that is out of both end portions of the first sliding groove 331 in the extending direction thereof and that is farther from the distal end of the first rear link 310 is referred to as a second end. Surfaces that are included in surfaces being inner surfaces of the first rib 321 and defining the first sliding groove 331 and that extend along the longitudinal direction of the first rear link 310 are referred to as a first upper sliding surface 332 and a first lower sliding surface 333. The first upper sliding surface 332 and the first lower sliding surface 333 correspond to "sliding surfaces".

The first upper sliding surface 332 and the first lower sliding surface 333 are mutually faces surfaces, and in states illustrated in FIG. 28 to FIG. 30, the first upper sliding surface 332 is located on an upper side of the first lower sliding surface 333. The first upper sliding surface 332 includes, from the distal end of the first rear link 310 toward the proximal end of the first rear link 310, a first surface 332a, a second surface 332b, a third surface 332c, and a fourth surface 332d. Similarly, the first lower sliding surface 333 includes, from the distal end of the first rear link 310 toward the proximal end of the first rear link 310, a first surface 333a, a second surface 333b, a third surface 333c, and a fourth surface 333d. The first surfaces 332a and 333a and the third surfaces 332c and 333c extend in the same direction. The second surfaces 332b and 333b are inclined from the adjacent first surfaces 332a and 333a, and the fourth surfaces 332d and 333d are inclined from the adjacent third surfaces 332c and 333c. The first surfaces 332a and 333a and the fourth surfaces 332d and 333d are shorter than the second surfaces 332b and 333b and the third surfaces 332c and 333c.

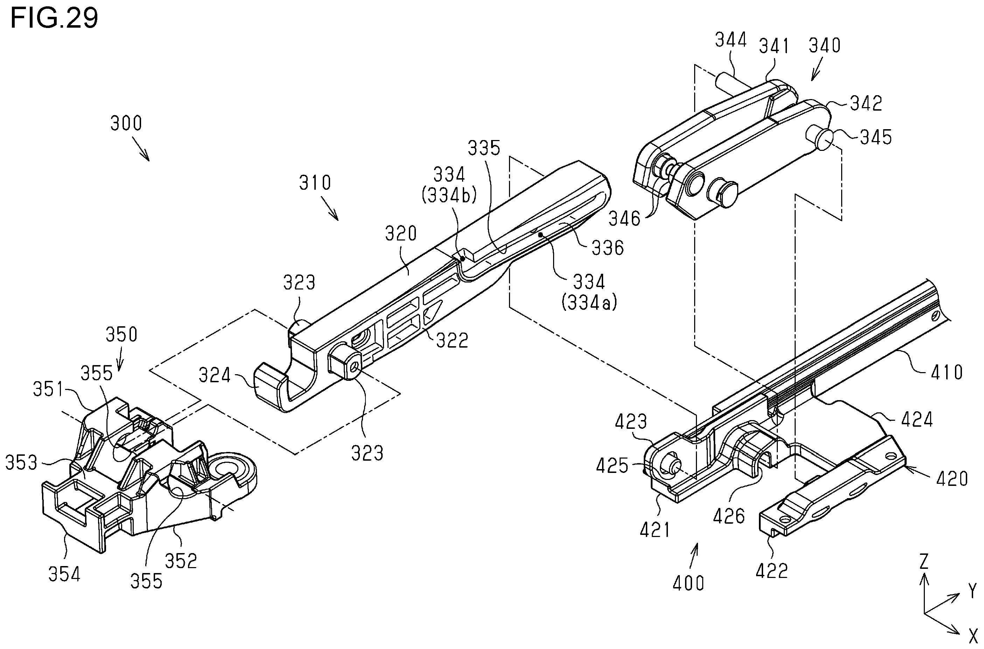

As illustrated in FIG. 29 and FIG. 31, the second rib 322 extends outward in the width direction from the base portion 311a of the core member 311. Namely, the direction in which the second rib 322 extends is a direction opposite to the direction in which the first rib 321 extends. The second rib 322 is located off the base portion 311a of the core member 311 outward in the width direction. A part of the second rib 322 covers the upper flange 311c of the core member 311.

As illustrated in FIG. 29, the second rib 322 defines a second sliding groove 334. The second sliding groove 334 is concave toward the base portion 311a in the width direction. The second sliding groove 334 includes a transverse groove 334a extending in such a way as to be along the longitudinal direction of the first rear link 310, and a height groove 334b extending in a direction intersecting with the transverse groove 334a. The transverse groove 334a extends from the vicinity of the distal end of the first rear link 310 toward the proximal end of the first rear link 310. The height groove 334b extends from an end portion included in the traverse groove 334a and close to a rotational axis of the first rear link 310. A length of the height groove 334b is shorter than a length of the traverse groove 334a. The height groove 334b penetrates through the second rib 322. In the following description, an end portion that is out of both end portions of the second sliding groove 334 in the extending direction thereof and that is closer to the distal end of the first rear link 310 is referred to as a first end, and an end portion that is out of both end portions of the second sliding groove 334 in the extending direction thereof and that is farther to the distal end of the first rear link 310 is referred to as a second end. Surfaces that are included in surfaces being inner side surfaces of the second rib 322 and defining the second sliding groove 334 and that extend along the longitudinal direction of the first rear link 310 are referred to as a second upper sliding surfaces 335 and a second lower sliding surface 336. The second upper sliding surface 335 and the second lower sliding surface 336 are mutually facing surfaces, and in the states illustrated in FIG. 28 to FIG. 30, the second upper sliding surface 335 is located on an upper side of the second lower sliding surface 336.

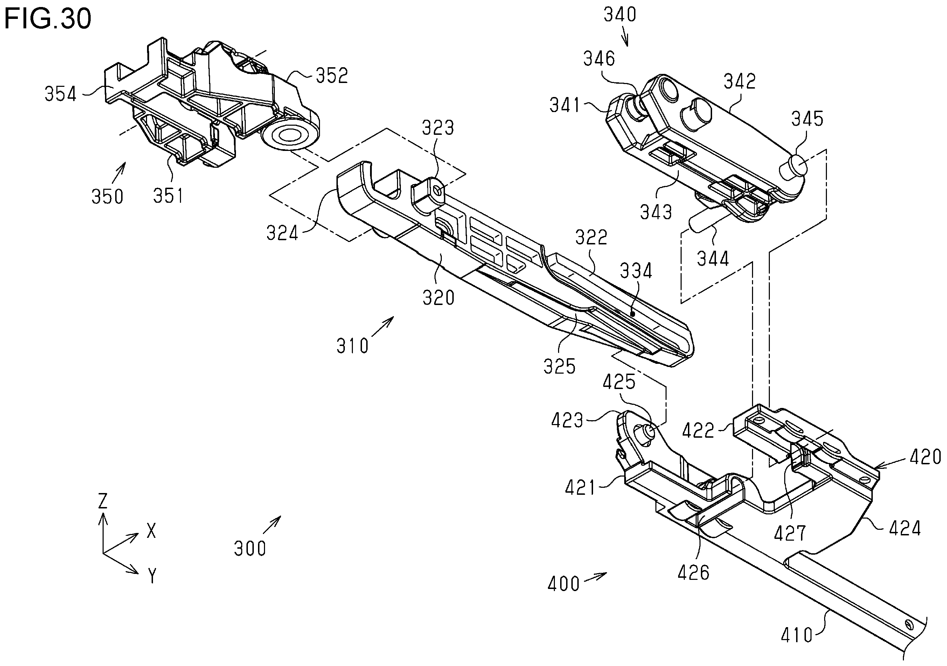

As illustrated in FIG. 30, the second rib 322 includes an engagement concave portion 325 having a depth direction perpendicular to both of the width direction and the longitudinal direction of the first rear link 310. The engagement concave portion 325 have a width-direction space that becomes narrower while shifting in the depth direction. The engagement concave portion 325 is located at a longitudinal-direction center portion of the first rear link 310. In the first rear link 310, a surface that is out of two surfaces perpendicular to both of the width direction and the longitudinal direction of the first rear link 310 and on which the second sliding groove 334 is open is assumed to be an upper surface, and in this case, it can be said that the engagement concave portion 325 is open on a lower surface on an opposite side of the upper surface.

As illustrated in FIG. 28 and FIG. 29, the two support shafts 323 extend inward and outward in the width direction, respectively. The axes of the two support shafts 323 are located on the same straight line, and pass, in the width direction, through the proximal end portion of the first rear link 310. The two support shafts 323 each have an ellipse-shaped section perpendicular to the width direction. Thus, a distance between two flat surfaces that form side surfaces of the support shafts 323 is shorter than a distance between the two circumferential surfaces that form side surfaces of the support shafts 323. The two support shafts 323 are located closer to the proximal end of the second rear link 340 than to the distal end of the second rear link 340. The hook 324 constitutes the proximal end portion of the first rear link 310. The hook 324 is an L-shaped in a side view in the width direction. A distal end of the hook 324 extends from the lower surface that is included in the first rear link 310 and on which the engagement concave portion 325 is open, toward the upper surface that is included in the first rear link 310 and on which the second sliding groove 334 is open.

### <Second Rear Link 340>

The second rear link 340 is configured by covering a metal material with a resin material, similarly to the first rear link 310. In another embodiment, the second rear link 340 may be made of only a metal material, or may be made of only a resin material. The second rear link 340 has a rod shape. In the following description, one longitudinal-direction end of the second rear link 340 is referred to as a proximal end, and an opposite longitudinal-direction end of the second rear link 340 is referred to as a distal end.

As illustrated in FIG. 28 to FIG. 30, the second rear link 340 includes a first side wall 341, a second side wall 342, an intermediate wall 343, a first support shaft 344, a second support shaft 345, two guide shafts 346, a second sliding shaft 347, and an engagement convex portion 348.

The first side wall 341 and the second side wall 342 each have a plate shape, and each have a thickness direction matching the width direction. The first side wall 341 and the second side wall 342 are alongside each other in the width direction. The first side wall 341 is located on a width-direction inner side of the second side wall 342. An interval between the first side wall 341 and the second side wall 342 in the width direction is slightly wider than a length of the support bracket 270 in the width direction. The intermediate wall 343 has a plate shape, and has a plate thickness direction perpendicular to both of the width direction and the longitudinal direction of the second rear link 340. The intermediate wall 343 connects the first side wall 341 and the second side wall 342 to each other in the width direction.

The first support shaft 344 extends inward in the width direction from a proximal end portion of the first side wall 341, and the second support shaft 345 extends outward in the width direction from a proximal end portion of the second side wall 342. The axis of the first support shaft 344 and the axis of the second support shaft 345 are located on the same straight line. One of the two guide shafts 346 extends outward in the width direction from a distal end portion of the first side wall 341, and the other of the two guide shafts 346 extends inward in the width direction from a distal end portion of the second side wall 342. The axes of the two guide shafts 346 are located on the same straight line. In this regard, it can be said that the two guide shafts 346 extend in a direction of approaching each other.

As illustrated in FIG. 28, the second sliding shaft 347 extends inward in the width direction from a center portion of the first side wall 341. In the width direction, a length of the second sliding shaft 347 is shorter than a length of the first support shaft 344. The engagement convex portion 348 extends inward in the width direction from the proximal end portion of the first side wall 341, and then extends toward the distal end portion of the first side wall 341. Specifically, the engagement convex portion 348 extends from a portion that is included in the first side wall 341 and that is between a position at which the first support shaft 344 extends and a position at which the second sliding shaft 347 extends. The engagement convex portion 348 has a width-direction length that becomes shorter toward a distal end of the engagement convex portion 348 when viewed from a plate thickness direction of the intermediate wall 343. Namely, the engagement convex portion 348 is tapered.

### <Link Support Portion 350>

As illustrated in FIG. 28 to FIG. 30, the link support portion 350 includes a first support block 351, a second support block 352, a first connection wall 353, and a second connection wall 354.

The first support block 351 and the second support block 352 are arranged alongside each other at an interval in the width direction. The first support block 351 is located on a width-direction inner side of the second support block 352. An interval between the first support block 351 and the second support block 352 in the width direction is slightly wider than a width-direction length of the first rear link 310 excluding the two support shafts 323. Meanwhile, an interval between the first support block 351 and the second support block 352 in the width direction is narrower than a width-direction length of the first rear link 310 including the two support shafts 323. The first support block 351 and the second support block 352 each include a support hole 355 penetrating therethrough in the width direction. The two support holes 355 each have a circular shape when viewed from the width direction, and the axes of the two support holes 355 are located on the same straight line. Here, the first support block 351 and the second support block 352 do not include wall portions that define front sides of the two support holes 355. Thus, the two support holes 355 are open to a front side that is also radial directions of the two support holes 355. Therefore, when the link support portion 350 is viewed from a front side, inner circumferential surfaces of the support holes 355 are exposed.

The first connection wall 353 connects the first support block 351 and the second support block 352 to each other in the width direction, on a rear side of the support holes 355. The second connection wall 354 connects the first support block 351 and the second support block 352 to each other in the width direction, on a rear side of and on a lower side of the first connection wall 353. Both in the front-rear direction and in the up-down direction, a gap exists between the first connection wall 353 and the second connection wall 354.

### <Power Transmission Member 400>

As illustrated in FIG. 28 to FIG. 30, the power transmission member 400 is an elongated member having a longitudinal direction that matches the front-rear direction. The power transmission member 400 is configured by covering a metal material with a resin material, similarly to the first rear link 310. In another embodiment, the power transmission member 400 may be made of only a metal material, or may be made of only a resin material. The power transmission member 400 includes a rod body 410 and a rear shoe 420. The power transmission member 400 includes the check block 190.

The rod body 410 extends in the front-back direction. When the main rail 260 is slightly curved as in the second embodiment, it is preferable that the rod body 410 is similarly curved.

The rear shoe 420 is connected to a rear end portion of the rod body 410. The rear shoe 420 includes a first sliding block 421, a second sliding block 422, a retaining wall 423, a connection plate 424, and a first sliding shaft 425.

The first sliding block 421 and the second sliding block 422 are arranged alongside each other at an interval in the width direction. The first sliding block 421 is located on a width-direction inner side of the second sliding block 422. The first sliding block 421 includes a first concave portion 426 that is concave upward from a bottom surface of the first sliding block 421. The second sliding block 422 includes a second concave portion 427 that is concave upward from a bottom surface of the second sliding block 422. The first concave portion 426 and the second concave portion 427 each have a semi-ellipse shape in a side view in the width direction. The retaining wall 423 has a plate shape, and has a plate thickness direction matching the width direction. The retaining wall 423 extends upward from the first sliding block 421. The retaining wall 423 retains a proximal end of the first sliding shaft 425. In a state of being retained by the retaining wall 423, the first sliding shaft 425 extends outward in the width direction. Namely, the first sliding shaft 425 includes the proximal end that is a fixed end, and a distal end that is a free end. The first sliding shaft 425 corresponds to "sliding shaft". The connection plate 424 has a plate shape, and has a plate thickness direction matching the up-down direction. The connection plate 424 connects the first sliding block 421 and the second sliding block 422 to each other in the width direction.

### <Engagement Relation between Rear Support Portion 300 and Power Transmission Member 400>

As illustrated in FIG. 26, the link support portion 350 is fixed to the rear end of the main rail 260 by using a fastening member such as a screw. At this time, a large part of the link support portion 350 protrudes rearward from the main rail 260. In another embodiment, the link support portion 350 can be accommodated in the accommodation space 264 of the main rail 260.

As illustrated in FIG. 28 to FIG. 30, the two support shafts 323 of the first rear link 310 are inserted into the two support holes 355 of the link support portion 350. Thus, the first rear link 310 is rotatable around the axes of the two support shafts 323, relative to the link support portion 350. Here, when the first rear link 310 is supported by the link support portion 350, a posture of the first rear link 310 is first determined in such a way that the two flat surfaces constituting the side surfaces of the two support shafts 323 of the first rear link 310 face in the up-down direction. Next, a height of the axes of the two support shafts 323 of the first rear link 310 is adjusted to a height of the axes of the two support holes 355 of the link support portion 350. Then, the first rear link 310 is moved rearward, and the two support shafts 323 of the first rear link 310 are accommodated in insides of the two support holes 355 of the link support portion 350. Finally, the first rear link 310 is tilted down to a front side, and thereby, the first rear link 310 is supported by the link support portion 350.

The power transmission member 400 is accommodated in the accommodation space 264 of the main rail 260. Specifically, the rod body 410 and the first sliding block 421 of the power transmission member 400 are accommodated in a space defined by the bottom wall 261, the first inner wall 262a, and the third inner wall 262c of the main rail 260. Meanwhile, the second sliding block 422 of the power transmission member 400 is accommodated in a space defined by the first outer wall 263a, the second outer wall 263b, and the third outer wall 263c of the main rail 260. Thus, the power transmission member 400 is movable in the front-rear direction along the main rail 260, in a state of being restricted from moving in the width direction and the up-down direction. In the second embodiment, the main rail 260 is curved, and thus, the state of being restricted from moving in the up-down direction is a state in which the bottom wall 261, the third inner wall 262c, the second outer wall 263b, and the third outer wall 263c of the main rail 260 are restricted from moving in the plate thickness directions thereof.

The first support shaft 344 of the second rear link 340 is arranged between the first sliding block 421 and the bottom wall 261 of the main rail 260. Meanwhile, the second support shaft 345 of the second rear link 340 is arranged between the second sliding block 422 and the bottom wall 261 of the main rail 260. At this time, the first support shaft 344 of the second rear link 340 is accommodated in the first concave portion 426 of the first sliding block 421, and the second support shaft 345 of the second rear link 340 is accommodated in the second concave portion 427 of the second sliding block 422. Thus, the second rear link 340 is movable in the front-rear direction along the main rail 260 together with the power transmission member 400. The second rear link 340 is rotatable around the axes of the first support shaft 344 and the second support shaft 345, relative to the power transmission member 400.

In the state illustrated in FIG. 26, the retaining wall 423 of the power transmission member 400 is adjacent to the first rear link 310 in the width direction. Specifically, the retaining wall 423 of the power transmission member 400 is located on a width-direction outer side of the first rear link 310. At this time, as illustrated in FIG. 27 and FIG. 28, the first sliding shaft 425 of the power transmission member 400 is located inside the first sliding groove 331 of the first rear link 310. Accordingly, when the power transmission member 400 moves in the front-rear direction, the first sliding shaft 425 slides on the first sliding groove 331.

In the state illustrated in FIG. 26, the first rear link 310 is adjacent to the second rear link 340 in the width direction. Specifically, the first rear link 310 is located on a width-direction inner side of the second rear link 340. At this time, as illustrated in FIG. 27 and FIG. 29, the second sliding shaft 347 of the second rear link 340 is located inside the second sliding groove 334 of the first rear link 310. Accordingly, when the second rear link 340 moves in the front-rear direction, the second sliding shaft 347 slides on the second sliding groove 334.

As illustrated in FIG. 27, the distal end portion of the second rear link 340 supports the support bracket 270. At this time, the second rear link 340 sandwiches the support bracket 270 between the two guide shafts 346 in the width direction. Under a situation where the second rear link 340 supports the support bracket 270, the support bracket 270 is rotatable around the axes of the two guide shafts 346, relative to the distal end portion of the second rear link 340. The support bracket 270 is slidable on the two guide shafts 346 of the second rear link 340 in the longitudinal direction of the support bracket 270.

### <Relation between Position of Movable Panel 40 and Position of Drive Shoe 110>

The sunroof apparatus 30A according to the second embodiment operates the movable panel 40 by moving the drive shoe 110 in the front-rear direction. Specifically, when the drive shoe 110 is moved rearward, the movable panel 40 is opened, and when the drive shoe 110 is moved forward, the movable panel 40 is closed. In the following description, a position at which the movable panel 40 fully closes the roof opening 25 is referred to as "fully closing position", and a position at which the movable panel 40 fully opens the roof opening 25 is referred to as "fully opening position". A position at which the rear end portion of the movable panel 40 is moved higher than the fully closing position is referred to as "tilt-up position".

Further, a position of the drive shoe 110 at which the drive shoe 110 arranges the movable panel 40 at the fully closing position is referred to as "full-closing association position", and a position of the drive shoe 110 at which the drive shoe 110 arranges the movable panel 40 at the fully opening position is referred to as "full-opening association position". A position of the drive shoe 110 at which the drive shoe 110 arranges the movable panel 40 at the tilt-up position is referred to as "tilt-up association position". In a movement range of the drive shoe 110, the most forward position is the full-closing association position, and the most rearward position is the full-opening association position. The tilt-up association position is a position between the full-closing association position and the full-opening association position.

The power transmission member 400 moves in the front-rear direction together with the drive shoe 110 when the drive shoe 110 moves between the full-closing association position and the tilt-up association position. Meanwhile, the power transmission member 400 does not move in the front-rear direction together with the drive shoe 110 when the drive shoe 110 moves between the tilt-up association position and the full-opening association position. In contrast to this, the front support portion 120 does not move in the front-rear direction together with the drive shoe 110 when the drive shoe 110 moves between the full-closing association position and the tilt-up association position. Meanwhile, the front support portion 120 moves in the front-rear direction together with the drive shoe 110 when the drive shoe 110 moves between the tilt-up association position and the full-opening association position.

### <Effects of Second Embodiment>

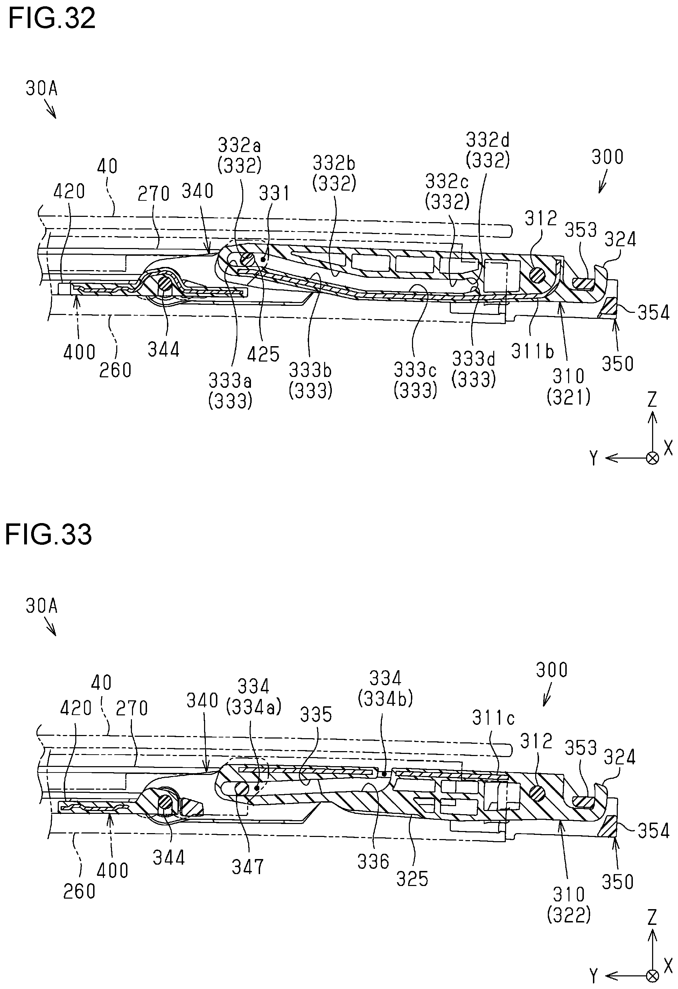

With reference to FIG. 32 to FIG. 37, the following describes effects when the sunroof apparatus 30A tilts up the movable panel 40. FIG. 32 to FIG. 37 are diagrams of sections of the sunroof apparatus 30A perpendicular to the width direction. FIG. 32, FIG. 34, and FIG. 36 are the diagrams of the sections passing through the first sliding groove 331 of the first rear link 310, and FIG. 33, FIG. 35, and FIG. 37 are the diagrams of the sections passing through the second sliding groove 334 of the first rear link 310.

In states illustrated in FIG. 32 and FIG. 33, the drive shoe 110 is located at the full-closing association position. When the drive shoe 110 is located at the full-closing association position, the power transmission member 400 is at the most forward position in the movement range in the front-rear direction.

As illustrated in FIG. 32, when the power transmission member 400 is located at the most forward position, the first sliding shaft 425 of the power transmission member 400 is located at a first end portion of the first sliding groove 331 of the first rear link 310. The first sliding shaft 425 of the power transmission member 400 contacts with the first lower sliding surface 333 of the first sliding groove 331. Specifically, the first sliding shaft 425 of the power transmission member 400 contacts with the first surface 333a. At this time, the first sliding shaft 425 of the power transmission member 400 pushes down the first rear link 310 toward the bottom wall 261 of the main rail 260. In the following description, a position at which the first rear link 310 is tilted down as illustrated in FIG. 32 and FIG. 33 is referred to as "first tilted-down position". When the first rear link 310 is located at the first tilted-down position, inclination of the first sliding groove 331 and the second sliding groove 334 of the first rear link 310 from the front-rear direction is small.

In the state illustrated in FIG. 32, the first surfaces 332a and 333a of the first sliding groove 331 extend in the front-rear direction. The second surfaces 332b and 333b of the first sliding groove 331 are inclined in such a way as to extend downward while shifting to a rear side. In other words, the second surfaces 332b and 333b of the first sliding groove 331 are inclined in such a way as to extend toward a lower edge of the main rail 260 while shifting from the distal end of the first rear link 310 toward the proximal end of the first rear link 310. In the state illustrated in FIG. 33, the second lower sliding surface 336 of the second sliding groove 334 is slightly inclined in such a way as to extend upward while shifting to a rear side. In other words, the second lower sliding surface 336 is inclined in such a way as to extend toward an upper edge of the main rail 260 while shifting from the distal end of the first rear link 310 toward the proximal end of the first rear link 310.

As illustrated in FIG. 33, when the power transmission member 400 is at the most forward position, the second rear link 340 is also at the most forward position in a movement range thereof in the front-rear direction. Thus, the second sliding shaft 347 of the second rear link 340 is located at the first end portion of the second sliding groove 334 of the first rear link 310. The second sliding shaft 347 of the second rear link 340 contacts with the second upper sliding surface 335 of the second sliding groove 334. At this time, the second upper sliding surface 335 of the first rear link 310 pushes down the second rear link 340 toward the bottom wall 261 of the main rail 260. In the following description, as illustrated in FIG. 32 and FIG. 33, a position at which the second rear link 340 is tilted down is referred to as "second tilted-down position".

As illustrated in FIG. 32, when the first rear link 310 is located at the first tilted-down position, the first rear link 310 is located on a lower side of the upper edge of the main rail 260. Namely, in a side view in the width direction, the first rear link 310 excluding the proximal end portion is hidden by the main rail 260. Similarly, as illustrated in FIG. 33, when the second rear link 340 is located at the second tilted-down position, the second rear link 340 is located on a lower side of the upper edge of the main rail 260. Namely, in a side view in the width direction, the second rear link 340 is hidden by the main rail 260. In this regard, the second sliding shaft 347 of the second rear link 340 is also hidden by the main rail 260.

As described above, when the drive shoe 110 is located at the full-closing association position, the first rear link 310 is located at the first tilted-down position, and the second rear link 340 is located at the second tilted-down position. Therefore, because of the point that the distal end portion of the second rear link 340 is moved downward, the rear end portion of the support bracket 270 is also moved downward. As a result, the movable panel 40 is arranged at the fully closing position. In such regard, the first tilted-down position of the first rear link 310 is a position at which the second rear link 340 is arranged at the second tilted-down position, and the second tilted-down position of the second rear link 340 is a position at which the movable panel 40 is arranged at the fully closing position.

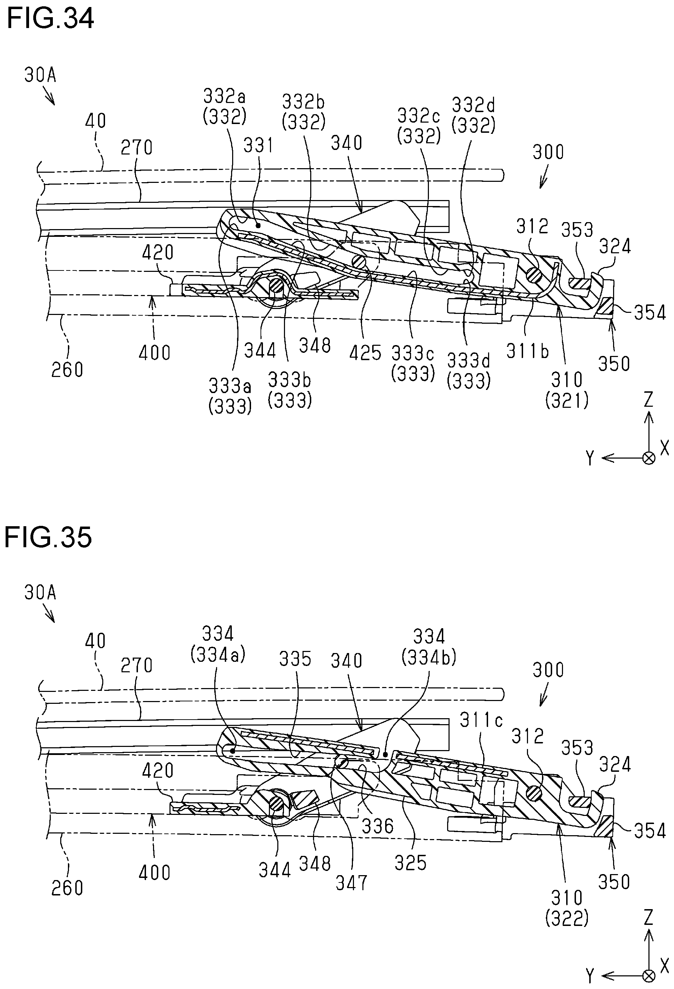

As illustrated in FIG. 34 and FIG. 35, when the drive shoe 110 moves rearward from the full-closing association position, power of the drive shoe 110 is transmitted to the power transmission member 400 without being transmitted to the front support portion 120. Namely, the power transmission member 400 moves rearward without substantially changing a position and a posture of the front support portion 120 that supports the front end portion of the support bracket 270.

As illustrated in FIG. 34, when the power transmission member 400 moves rearward, the first sliding shaft 425 of the power transmission member 400 slides on the first upper sliding surface 332 of the first rear link 310. Namely, the first sliding shaft 425 pushes the first upper sliding surface 332 rearward, and thereby, the first rear link 310 is rotated in such a way as to stand up from the first tilted-down position. Specifically, when the first sliding shaft 425 starts to slide on the second surface 332b, the first rear link 310 starts to rotate. As an amount of rotation of the first rear link 310 increases, inclination of the first sliding groove 331 and the second sliding groove 334 of the first rear link 310 from the front-rear direction increases.

As illustrated in FIG. 35, when the power transmission member 400 moves rearward, the second sliding shaft 347 of the second rear link 340 slides on the second lower sliding surface 336 of the first rear link 310 while the second rear link 340 moves rearward together with the power transmission member 400. Namely, the power transmission member 400 pushes the first support shaft 344 and the second support shaft 345 of the second rear link 340 rearward, and the second lower sliding surface 336 of the first rear link 310 push the second sliding shaft 347 of the second rear link 340 upward. As a result, the second rear link 340 is moved in such a way as to stand up. Accordingly, the rear end portion of the support bracket 270 supported by the second rear link 340 is moved upward. Thus, the movable panel 40 is tilted up. When the movable panel 40 is tilted up, a space is generated between the movable panel 40 and the main rail 260 in the up-down direction. Thus, even when the first rear link 310 is rotated in a direction of standing up, the first rear link 310 does not contact with the movable panel 40.

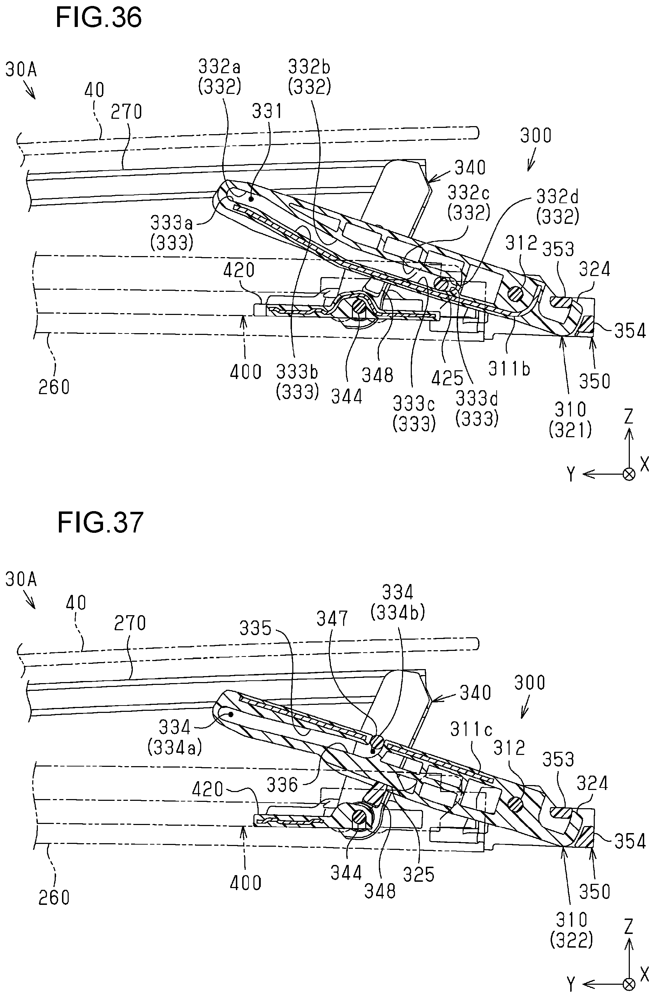

As illustrated in FIG. 36 and FIG. 37, when the drive shoe 110 moves as far as the tilt-up association position, the power transmission member 400 further moves rearward from the state illustrated in FIG. 34 and FIG. 35. After the drive shoe 110 moves as far as the tilt-up association position, the power transmission member 400 does not move rearward even when the drive shoe 110 moves rearward. Thus, a position of the power transmission member 400 illustrated in FIG. 36 and FIG. 37 is the most rearward position in the movement range thereof in the front-rear direction.

As illustrated in FIG. 36, when the power transmission member 400 moves as far as the most rearward position, the first sliding shaft 425 of the power transmission member 400 moves as far as the second end portion of the first sliding groove 331 of the first rear link 310. Thus, the first sliding shaft 425 of the power transmission member 400 contacts with the fourth surface 332d of the first sliding groove 331. As a result, the first rear link 310 takes the most standing-up posture. In the following description, a position at which the first rear link 310 stands up as illustrated in FIG. 36 is referred to as "first standing position". When the first rear link 310 is located at the first standing position, inclination of the first sliding groove 331 of the first rear link 310 from the front-rear direction becomes maximum. At this time, the fourth surfaces 332d and 333d of the first sliding groove 331 of the first rear link 310 extend in the front-rear direction.

As illustrated in FIG. 37, when the power transmission member 400 moves as far as the most rearward position, the second rear link 340 also moves as far as the most rearward position in the movement range thereof in the front-rear direction. The second sliding shaft 347 of the second rear link 340 moves as far as the second end portion of the second sliding groove 334 of the first rear link 310. As a result, the second rear link 340 takes the most standing-up posture. In the following description, a position at which the second rear link 340 stands up as illustrated in FIG. 37 is referred to as "second standing position". When the second rear link 340 is located at the second standing position, the distal end of the second rear link 340 is moved the highest. Thus, the rear end portion of the support bracket 270 supported by the second rear link 340 is also moved the highest. As a result, tilting-up of the movable panel 40 is completed, and the movable panel 40 is arranged at the tilt-up position. In such regard, the first standing position of the first rear link 310 is a position at which the second rear link 340 is arranged at the second standing position, and the second standing position of the second rear link 340 is a position at which the movable panel 40 is arranged at the tilt-up position.

As illustrated in FIG. 36, when the first rear link 310 is located at the first standing position, a part of the first rear link 310 protrudes upward from the upper edge of the main rail 260. Similarly, as illustrated in FIG. 37, when the second rear link 340 is located at the second standing position, a part of the second rear link 340 protrudes upward from the upper edge of the main rail 260. At this time, the second sliding shaft 347 of the second rear link 340 is located on an upper side of the upper edge of the main rail 260.

In the state illustrated in FIG. 37, the second sliding shaft 347 of the second rear link 340 is located inside the second sliding groove 334 of the first rear link 310. Here, the height groove 334b of the first rear link 310 extends upward from an end portion included in the traverse groove 334a and closer to the rotational axis of the first rear link 310. Here, extending upward does not means that the traverse groove 334b extends along the up-down direction, but embraces that the height groove 334b extends along a direction slightly inclined from the up-down direction. However, inclination of the height groove 334b from the front-rear direction is larger than inclination of the traverse groove 334a from the front-rear direction. A part of the second sliding shaft 347 of the second rear link 340 slightly protrudes out of the second sliding groove 334 of the first rear link 310.

Next, the effect when the sunroof apparatus 30A tilts down the movable panel 40 will be briefly described.

When the movable panel 40 is tilted down from the tilt-up position, the drive shoe 110 is moved forward from the tilt-up association position. When the drive shoe 110 moves forward from the tilt-up association position, the power transmission member 400 moves forward together with the drive shoe 110. Then, the first sliding shaft 425 of the power transmission member 400 slides on the first lower sliding surface 333 of the first rear link 310, and thereby, the first rear link 310 rotates in such a way as to fall down from the first standing position. Specifically, the first sliding shaft 425 of the power transmission member 400 slides on the fourth surface 333d, the third surface 333c, the second surface 333b, and the first surface 333a of the first rear link 310 in turn, and thereby, the first rear link 310 rotates in such a way as to fall down from the first standing position. When the drive shoe 110 moves forward from the tilt-up association position, the second rear link 340 moves forward together with the power transmission member 400. At this time, the second sliding shaft 347 of the second rear link 340 slides on the second upper sliding surface 335 of the first rear link 310, and thereby, the second rear link 340 rotates in such a way as to fall down from the second standing position. When the drive shoe 110 moves as far as the full-closing association position, the first rear link 310 is located at the first tilted-down position, and the second rear link 340 is located at the second tilted-down position, as illustrated in FIG. 32 and FIG. 33. As a result, the movable panel 40 is arranged at the fully closing position.

Next, the effect when the movable panel 40 of the sunroof apparatus 30A operates in the front-rear direction will be briefly described.

In the sunroof apparatus 30A, when the drive shoe 110 moves between the tilt-up association position and the full-opening association position, power of the drive shoe 110 is transmitted to the front support portion 120, but power of the drive shoe 110 is not transmitted to the power transmission member 400. Namely, the front support portion 120 moves in the front-rear direction without changing of postures of the first rear link 310 and the second rear link 340.

Specifically, when the drive shoe 110 moves rearward from the tilt-up association position toward the full-opening association position, the front support portion 120 moves rearward together with the support bracket 270. At this time, the support bracket 270 moves rearward while sliding on the two guide shafts 346 of the second rear link 340. The movable panel 40 moves rearward together with the support bracket 270. When the drive shoe 110 moves as far as the full-opening association position, the movable panel 40 is arranged at the fully opening position. Meanwhile, when the drive shoe 110 moves forward from the full-opening association position toward the tilt-up association position, the front support portion 120 moves forward together with the support bracket 270. At this time, the support bracket 270 moves forward while sliding on the two guide shafts 346 of the second rear link 340. The movable panel 40 moves forward together with the support bracket 270. When the drive shoe 110 moves as far as the tilt-up association position, the movable panel 40 is arranged at the fully opening position.

### <Advantageous Effects of Second Embodiment>

(2-1) When the movable panel 40 is arranged at the fully closing position, the first rear link 310 is located at the first tilted-down position at which the first rear link 310 is tilted-down relative to the main rail 260. In this case, an amount of upward protrusion of the first rear link 310 relative to the main rail 260 is smaller. Meanwhile, when the movable panel 40 is arranged at the fully opening position, the first rear link 310 is located at the first standing position at which the first rear link 310 stands up relative to the main rail 260. In this case, an amount of upward protrusion of the first rear link 310 relative to the main rail 260 is larger. Namely, the sunroof apparatus 30A allows a standing-up amount of the second rear link 340 at the second standing position to be easily made larger, because of the point that a position of engagement between the first rear link 310 and the second rear link 340 via the second sliding shaft 347 and the second sliding groove 334 is easily arranged on an upper side. In other words, the sunroof apparatus 30A allows the rear end portion of the support bracket 270 supported by the second rear link 340 to be easily arranged on a further upper side when the second rear link 340 is arranged at the second standing position. Thus, the sunroof apparatus 30A can reduce a thickness of the apparatus in the up-down direction when the movable panel 40 is arranged at the fully closing position, while securing a tilt-up amount of the movable panel 40. For example, the sunroof apparatus 30A can reduce a thickness of the apparatus in the up-down direction due to the first rear link 310, as compared with a comparative example in which the first rear link 310 is fixed to the main rail 260.

(2-2) Power is transmitted from the power transmission member 400 to the first rear link 310 via the first sliding shaft 425 and the first sliding groove 331. Similarly, power is transmitted from the first rear link 310 to the second rear link 340 via the second sliding shaft 347 and the second sliding groove 334. Accordingly, the sunroof apparatus 30A allows a configuration of transmitting power from the power transmission member 400 to the first rear link 310 and a configuration of transmitting power from the first rear link 310 to the second rear link 340 to be similar to each other.

(2-3) In the first rear link 310, the first sliding groove 331 and the second sliding groove 334 are provided in the covering portion 320 made of a resin material. Thus, the sunroof apparatus 30A can enhance a degree of freedom in shapes of the first sliding groove 331 and the second sliding groove 334, as compared with a case where configurations corresponding to the first sliding groove 331 and the second sliding groove 334 are provided in the base portion 311a. In a case of a comparative example in which the configurations corresponding to the first sliding groove 331 and the second sliding groove 334 are provided by providing holes in the base portion 311a of the first rear link 310, the first rear link 310 is likely to become larger in size. In such respect, the sunroof apparatus 30A can suppress the first rear link 310 from becoming larger in size, as compared with the above-described comparative example.

(2-4) The first rear link 310 is arranged between the retaining wall 423 of the power transmission member 400 and the second rear link 340 in the width direction. Thus, the sunroof apparatus 30A enables a configuration of transmitting power from the power transmission member 400 to the first rear link 310 and a configuration of transmitting power from the first rear link 310 to the second rear link 340 to be arranged densely in the width direction. Accordingly, the sunroof apparatus 30A can suppress the rear support portion 300 from becoming larger in size in the width direction.

(2-5) When the vehicle 10 travels under a situation where the movable panel 40 is arranged at the tilt-up position, there is a case where a load in the front-rear direction temporarily or periodically acts on the movable panel 40. Such a load can be transmitted to the second rear link 340 via the movable panel 40 and the support bracket 270. In this regard, as illustrated in FIG. 37, under a situation where the movable panel 40 is arranged at the tilt-up position, the second sliding shaft 347 of the second rear link 340 are received in the height groove 334b extending in the up-down direction. Thus, the acting of the above-described load causes the second sliding shaft 347 of the second rear link 340 to try to move along the height groove 334b. Namely, the load is unlikely to be transmitted from the second rear link 340 to the first rear link 310 via the second sliding shaft 347. Thus, the sunroof apparatus 30A can suppress the movable panel 40 from moving from the tilt-up position when a load in the up-down direction acts on the movable panel 40 arranged at the tilt-up position.

(2-6) In the sunroof apparatus 30A, increasing a length of the height groove 334b of the first rear link 310 results in likelihood of an increase in a standing-up amount of the second rear link 340 when the second rear link 340 is arranged at the second standing position. In this regard, the sunroof apparatus 30A enables a length of the height groove 334b to be increased without an increase of a thickness of the first rear link 310 in the extending direction of the height groove 334b, because of the point that the height groove 334b of the first rear link 310 penetrates through the second rib 322.

(2-7) As illustrated in FIG. 37, when the first rear link 310 is located at the first standing position, and the second rear link 340 is located at the second standing position, the engagement convex portion 348 of the second rear link 340 is fitted into the engagement concave portion 325 of the first rear link 310. Specifically, in the width direction, the engagement concave portion 325 of the first rear link 310 sandwiches the engagement convex portion 348 of the second rear link 340. Thus, when the movable panel 40 is arranged at the tilt-up position, the first rear link 310 and the second rear link 340 are unlikely to move relative to each other in the width direction. Therefore, the sunroof apparatus 30A can suppress the movable panel 40 from accidentally moving from the tilt-up position due to the relative movement between the first rear link 310 and the second rear link 340 in the width direction.

(2-8) When the rotational axis of the first rear link 310 is located on an upper side of the upper edge of the main rail 260 in a side view in the width direction, the first rear link 310 is likely to protrude upward from the main rail 260. Meanwhile, when the rotational axis of the first rear link 310 is located on a lower side of the lower edge of the main rail 260 in a side view in the width direction, the first rear link 310 is likely to protrude downward from the main rail 260. In this regard, as illustrated in FIG. 32, the rotation axis of the first rear link 310 that is also the axis of the pin 312 is located on a lower side of the upper edge of the main rail 260 and on an upper side of the lower edge of the main rail 260. To be precise, the rotational axis of the first rear link 310 is located on a lower side of a rearward extension line of the upper edge of the main rail 260 and on an upper side of a rearward extension line of the lower edge of the main rail 260. Thus, the first rear link 310 located at the first tilted-down position is unlikely to protrude upward and downward from the main rail 260. As a result, the sunroof apparatus 30A can more reduce a thickness of the apparatus in the up-down direction when the movable panel 40 is arranged at the fully closing position.

(2-9) As illustrated in FIG. 32 and FIG. 33, when the first rear link 310 is located at the first tilted-down position, the hook 324 of the first rear link 310 is hooked to the second connection wall 354 of the link support portion 350. Accordingly, the sunroof apparatus 30A can stabilize a posture of the first rear link 310 at the first tilted-down position.

(2-10) A posture of the second rear link 340 when the drive shoe 110 moves from the full-closing association position to the tilt-up association position changes by a change in inclination of the first sliding groove 331 and the second sliding groove 334 of the first rear link 310. Thus, at the design stage, changing the inclination of the first sliding groove 331 and the second sliding groove 334 enables free selection of a posture change of the second rear link 340 with respect to a movement amount of the drive shoe 110. Namely, a position change of the movable panel 40 with respect to a movement amount of the drive shoe 110 can be freely selected.

(2-11) As illustrated in FIG. 32, when the drive shoe 110 is located at the full-closing association position, the first sliding shaft 425 of the power transmission member 400 is located at the first end portion of the first sliding groove 331 of the first rear link 310 located at the first tilted-down position. Namely, the first sliding shaft 425 of the power transmission member 400 contacts with the first surfaces 332a and 333a of the first sliding groove 331 of the first rear link 310. Here, the first surfaces 332a and 333a of the first rear link 310 extend in the front-rear direction that is the longitudinal direction of the main rail 260, Thus, even when a position of the power transmission member 400 slightly deviates from the original position in a case where the drive shoe 110 has been moved as far as the full-closing association position, a state where the first sliding shaft 425 of the power transmission member 400 contacts with the first surfaces 332a and 333a of the first sliding groove 331 is likely to be maintained. Accordingly, when the movable panel 40 is arranged at the fully closing position, the sunroof apparatus 30A enables the first rear link 310 to be arranged at the first tilted-down position, regardless of positional deviation of the drive shoe 110 and the power transmission member 400.

(2-12) As illustrated in FIG. 36, when the drive shoe 110 is located at the tilt-up association position, the first sliding shaft 425 of the power transmission member 400 is located at the second end portion of the first sliding groove 331 of the first rear link 310 located at the first standing position. Namely, the first sliding shaft 425 of the power transmission member 400 contacts with the fourth surfaces 332d and 333d of the first sliding groove 331 of the first rear link 310. Here, the fourth surfaces 332d and 333d of the first rear link 310 extend in the front-rear direction that is the longitudinal direction of the main rail 260. Thus, even when a position of the power transmission member 400 slightly deviates from the original position in a case where the drive shoe 110 has been moved as far as the tilt-up association position, a state where the first sliding shaft 425 of the power transmission member 400 contacts with the fourth surfaces 332d and 333d of the first sliding groove 331 is likely to be maintained. Accordingly, when the movable panel 40 is arranged at the tilt-up position, the sunroof apparatus 30A enables the first rear link 310 to be arranged at the first standing position, regardless of positional deviation of the drive shoe 110 and the power transmission member 400.

(2-13) When the first rear link 310 is arranged at the first tilted-down position, the first rear link 310 is located on a lower side of the upper edge of the main rail 260. Similarly, when the second rear link 340 is arranged at the second tilted-down position, the second rear link 340 is located on a lower side of the upper edge of the main rail 260. Thus, when the movable panel 40 is arranged at the fully closing position, the sunroof apparatus 30A can suppress a thickness of the apparatus in the up-down direction from being increased due to the first rear link 310 and the second rear link 340.

(2-14) When the first sliding shaft 425 of the power transmission member 400 slides on the first upper sliding surface 332 or the first lower sliding surface 333 of the covering portion 320 of the first rear link 310, the first sliding shaft 425 is received in the first sliding groove 331. When the first sliding shaft 425 of the power transmission member 400 is received in the first sliding groove 331, the first rear link 310 is unlikely to move even when external force acts on the first rear link 310 via the movable panel 40 or the like. Specifically, the first upper sliding surface 332 or the first lower sliding surface 333 of the first rear link 310 contacts with the first sliding shaft 425, and thereby, movement of the first rear link 310 is restricted. Thus, the sunroof apparatus 30A can stabilize a posture of the first rear link 310.

### <Modified Examples of Second Embodiment>

The second embodiment can be modified and implemented as in the following. The second embodiment and the following modified examples can be implemented in combination with each other within a range in which a technical contradiction does not occur.
- A direction in which the first sliding groove 331 of the first rear link 310 extends can be appropriately modified. Similarly, a direction in which the second sliding groove 334 of the first rear link 310 extends can be appropriately modified. In one example, the first sliding groove 331 and the second sliding groove 334 may extend linearly, or may extend while being curved. A certain extending direction of the first sliding groove 331 and a certain extending direction of the second sliding groove 334 enable the second rear links 340 to be moved without movement of the first rear link 310 when the drive shoe 110 moves rearward from the full-closing association position. Similarly, the first rear link 310 out of the first rear link 310 and the second rear links 340 can be moved without movement of the second rear links 340.
- The first rear link 310 may be a metal plate that is not covered with a resin material. In this case, the first sliding groove 331 and the second sliding groove 334 preferably penetrate through the first rear link 310 in the plate thickness direction.
- The first rear link 310 may include a configuration corresponding to the first sliding shaft 425, and the power transmission member 400 may include a configuration corresponding to the first sliding groove 331.
- The first rear link 310 may include a configuration corresponding to the second sliding shaft 347, and the second rear link 340 may include a configuration corresponding to the second sliding groove 334.
- In the first rear link 310 at the first tilted-down position, the distal end portion may be located on a rear side of the proximal end portion. Similarly, in the second rear link 340 at the second tilted-down position, the distal end portion may be located on a front side of the proximal end portion.
- The first rear link 310 may include the first sliding groove 331 and the second sliding groove 334 that are on one side in the width direction. In this case, the retaining wall 423 of the power transmission member 400 and the second rear link 340 are preferably arranged on the one side of the first rear link 310 in the width direction.
- In the first rear link 310, the second sliding groove 334 does not need to include the height groove 334b.
- In the first rear link 310, the height groove 334b does not need to penetrate through the second rib 322.
- The engagement convex portion 348 of the second rear link 340 may have a hemispherical shape. In this case, the engagement concave portion 325 of the first rear link 310 is preferably hemispherically concave.
- The first rear link 310 may include a configuration corresponding to the engagement convex portion 348. In this case, the second rear link 340 preferably includes a configuration corresponding to the engagement concave portion 325.
- The first rear link 310 does not need to include the engagement concave portion 325, and the second rear link 340 does not need to include the engagement convex portion 348.
- The link support portion 350 may protrude higher than the upper edge of the main rail 260. In this case, the rotational axis of the second rear link 340 may be on an upper side of the upper edge of the main rail 260. The link support portion 350 may protrude lower than the lower edge of the main rail 260. In this case, the rotational axis of the second rear link 340 may be on a lower side of the lower edge of the main rail 260.
- The sunroof apparatus 30A only needs to be able to operate the movable panel 40 between the fully closing position and the tilt-up position. Namely, the sunroof apparatus 30A does not need to include a configuration for arranging the movable panel 40 at the fully opening position.

### Reference Signs List

10 ... Vehicle
20 ... Vehicle body
25 ... Roof opening
30, 30A ... Sunroof apparatus
40 ... Movable panel
50 ... Actuator
60 ... Rail unit
70 ... Main rail
100, 270 ... Support bracket
110 ... Drive shoe
115 ... Guide shaft
116 ... Holding portion
117 ... Engagement groove
120 ... Front support portion
130 ... Front link
134 (134a, 134b) ... Guide hole
140, 300 ... Rear support portion
150 ... Rear link
310 ... First rear link (rear link)
340 ... Second rear link (rear link)
151, 311a ... Base portion
152, 320 ... Covering portion
153 ... First concave portion
154 ... Second concave portion
155, 156 ... First sliding surface (sliding surface)
332 ... First upper sliding surface (sliding surface)
333 ... First lower sliding surface (sliding surface)
157 ... Second sliding surface
161 ... Slider
162 ... Link support portion
163 ... Link biasing portion
170, 400 ... Power transmission member
180 ... Check rod
181, 410 ... Rod body
184, 425 ... First sliding shaft (sliding shaft)
185 ... Second sliding shaft
186 ... Roller
190 ... Check block
192 ... sandwiching portion
193 ... Engagement shaft
200 ... Deflector
202 ... Arm
204 ... Arm biasing portion
206 ... Screen

## Claims

1. A sunroof apparatus (30) comprising:
a movable panel (40) that is operated among a fully closing position of fully closing a roof opening of a vehicle, a tilt up position of moving a rear end portion higher than the fully closing position, and a fully opening position of fully opening the roof opening;
a support bracket (100) that supports the movable panel on each of both sides of the movable panel in a width direction and extends in a front-rear direction;
a rail unit (60) that is arranged on each of both sides of the roof opening in the width direction and has a longitudinal direction matching the front-rear direction;
a front support portion (120) that supports the support bracket;
a rear support portion (140) that supports the support bracket, on a rear side of the front support portion;
a drive shoe (110) that moves in the front-rear direction along the rail unit, and thereby drives the front support portion and the rear support portion; and
a power transmission member (170) that includes a sliding shaft (184, 185) having a distal end being a free end and having an axial direction matching the width direction, and transmits power from the drive shoe to the rear support portion, wherein
the front support portion includes a front link (130) moving in the front-rear direction along the rail unit, based on power transmitted from the drive shoe, and thereby operating the movable panel between the tilt-up position and the fully opening position,
the rear support portion includes a rear link (150) sliding on the sliding shaft of the power transmission member, and thereby rotating, around an axis extending in the width direction, between a tilted-down position of moving the movable panel to the fully closing position and a standing position of moving the movable panel to the tilt-up position,
**characterized in that**
the rear link includes a base portion (151) having a plate shape and a covering portion (152) being made of a resin material and covering the base portion,
the covering portion includes a sliding surface (155-157) that slides on the sliding shaft, and
the sliding surface is located off the base portion in the width direction.

2. The sunroof apparatus according to claim 1, wherein,
the sliding surface is provided only on one side in the base portion in the width direction.

3. The sunroof apparatus according to claim 1, wherein,
the rear support portion includes a link biasing portion (163) that biases, toward the sliding shaft the rear link located at the tilted-down position.

4. The sunroof apparatus according to any one of claims 1 to 3, wherein
the sliding shaft is a first sliding shaft (184), and the sliding surface is a first sliding surface (155, 156),
the power transmission member includes a second sliding shaft (185) that extends in a same direction as the first sliding shaft while being at an interval from the first sliding shaft,
the covering portion includes a second sliding surface (157) on which the second sliding shaft slides, and
the first sliding shaft and the second sliding shaft slide on the first sliding surface and the second sliding surface, respectively, and thereby, the rear link moves between the tilted-down position and the standing position.

5. The sunroof apparatus according to claim 4, wherein
one of the first sliding shaft and the second sliding shaft includes a roller (186) rolling on an associated sliding surface that is one of the first sliding surface and the second sliding surface, and
an elastic modulus of the roller is smaller than an elastic modulus of the covering portion.

6. The sunroof apparatus according to any one of claims 1 to 3, wherein
a material of the base portion is metal.

7. The sunroof apparatus according to any one of claims 1 to 3, wherein,
the covering portion includes a sliding groove (153) _{NJ} that is concave toward the base portion in the width direction,
at least a part of the sliding surface is an inner surface of the sliding groove, and
the sliding shaft of the power transmission member is received in the sliding groove when the sliding shaft slides on at least a part of the sliding surface.

## Patentansprüche

1. Schiebedachvorrichtung, umfassend:
ein bewegliches Panel (40), das zwischen einer vollständig geschlossenen Position in der eine Dachöffnung eines Fahrzeugs vollständig geschlossen ist, einer nach oben geneigten Position, in der ein hinterer Endabschnitt in eine höhere als in der vollständig geschlossenen Position bewegt ist, und einer vollständig geöffnete Position, in der die Dachöffnung vollständig geöffnet ist, betrieben wird;
eine Stützhalterung (100), die das bewegliche Panel auf jeder von beiden Seiten des beweglichen Panels in einer Breitenrichtung stützt und sich in einer Vorder-Hinter-Richtung erstreckt;
eine Schieneneinheit (60), die auf jeder von beiden Seiten der Dachöffnung in der Breitenrichtung angeordnet ist und eine Längsrichtung aufweist, die der Vorder-Hinter-Richtung entspricht;
einen vorderen Stützabschnitt (120), der die Stützhalterung stützt;
einen hinteren Stützabschnitt (140), der die Stützhalterung auf einer hinteren Seite des vorderen Stützabschnitts stützt;
einen Antriebsschuh (110), der sich in der Vorder-Hinter-Richtung entlang der Schieneneinheit bewegt und dadurch den vorderen Stützabschnitt und den hinteren Stützabschnitt antreibt; und
ein Kraftübertragungsglied (170), das eine Gleitwelle (184, 185) aufweist, die ein distales Ende hat, das ein freies Ende ist, und eine Achsrichtung aufweist, die der Breitenrichtung entspricht, und Kraft von dem Antriebsschuh zu dem hinteren Stützabschnitt überträgt, wobei
der vordere Stützabschnitt eine vordere Verbindung (130) aufweist, die sich in der Vorder-Hinter-Richtung entlang der Schieneneinheit bewegt, basierend auf der Kraft, die von dem Antriebsschuh übertragen wird, und dadurch das bewegliche Panel zwischen der nach oben geneigten Position und der vollständig geöffneten Position betätigt,
der hintere Stützabschnitt eine hintere Verbindung (150) aufweist, die auf der Gleitwelle des Kraftübertragungsglieds gleitet und dadurch um eine sich in der Breitenrichtung erstreckende Achse zwischen einer nach unten geneigten Position des Bewegens des beweglichen Panels zu der vollständig geschlossenen Position und einer stehenden Position des Bewegens des beweglichen Panels zu der Kippstellung rotiert, **dadurch gekennzeichnet, dass**
die hintere Verbindung einen Basisabschnitt (151) mit einer Plattenform und einen Abdeckabschnitt (152) aufweist, der aus einem Harzmaterial hergestellt ist und den Basisabschnitt abdeckt,
der Abdeckabschnitt eine Gleitfläche (155-157) aufweist, die auf der Gleitwelle gleitet, und
die Gleitfläche sich außerhalb des Basisabschnitts in der Breitenrichtung befindet.

2. Schiebedachvorrichtung nach Anspruch 1, wobei
die Gleitfläche nur auf einer Seite in dem Basisabschnitt in der Breitenrichtung vorgesehen ist.

3. Schiebedachvorrichtung nach Anspruch 1, wobei
der hintere Stützabschnitt ein Verbindungsteil (163) aufweist, das die hintere Verbindung, die sich in der nach unten geneigten Position befindet, zu der Gleitwelle hin vorspannt.

4. Schiebedachvorrichtung nach einem der Ansprüche 1 bis 3, wobei
die Gleitwelle eine erste Gleitwelle (184) ist und die Gleitfläche eine erste Gleitfläche (155, 156) ist,
das Kraftübertragungsglied eine zweite Gleitwelle (185) aufweist, die sich in derselben Richtung wie die erste Gleitwelle erstreckt, wobei sie in einem Abstand von der ersten Gleitwelle angeordnet ist,
der Abdeckabschnitt eine zweite Gleitfläche (157) aufweist, auf der die zweite Gleitwelle gleitet, und
die erste Gleitwelle und die zweite Gleitwelle auf der ersten Gleitfläche und der zweiten Gleitfläche gleiten und dadurch die hintere Verbindung zwischen der nach unten geneigten Position und der stehenden Position bewegt.

5. Schiebedachvorrichtung nach Anspruch 4, wobei
eine von der ersten Gleitwelle und der zweiten Gleitwelle eine Rolle (186) umfasst, die auf einer zugehörigen Gleitfläche rollt, die eine von der ersten Gleitfläche und der zweiten Gleitfläche ist, und
ein Elastizitätsmodul der Rolle kleiner ist als ein Elastizitätsmodul des Abdeckabschnitts.

6. Schiebedachvorrichtung nach einem der Ansprüche 1 bis 3, wobei ein Material des Basisabschnitts Metall ist.

7. Schiebedachvorrichtung nach einem der Ansprüche 1 bis 3, wobei
der Abdeckabschnitt eine Gleitnut (153) aufweist, die zu dem Basisabschnitt hin in der Breitenrichtung konkav ist,
wenigstens ein Teil der Gleitfläche eine Innenfläche der Gleitnut ist, und
die Gleitwelle des Kraftübertragungsglieds in der Gleitnut aufgenommen ist, wenn die Gleitwelle auf wenigstens einem Teil der Gleitfläche gleitet.

## Revendications

1. Dispositif de toit ouvrant (30) comprenant :
un panneau mobile (40) qui est opéré entre une position de fermeture totale qui ferme complètement une ouverture dans le toit d'un véhicule, une position inclinée vers le haut qui soulève une partie arrière plus haut que la position de fermeture totale, et une position d'ouverture totale qui ouvre complètement l'ouverture dans le toit ;
un support (100) qui soutient le panneau mobile de chaque côté du panneau mobile dans une direction de la largeur et s'étend dans une direction avant-arrière ;
une unité de rail (60) qui est disposée de chaque côté de l'ouverture du toit dans la direction de la largeur et qui a une direction longitudinale correspondant à la direction avant-arrière ;
une partie de support avant (120) qui soutient le support ;
une partie de support arrière (140) qui soutient le support, sur un côté arrière de la partie de support avant ;
un sabot d'entraînement (110) qui se déplace dans la direction avant-arrière le long de l'unité de rail, et entraîne ainsi la partie de support avant et la partie de support arrière ; et
un élément de transmission de puissance (170) qui comporte un arbre coulissant (184, 185) ayant une extrémité distale qui est une extrémité libre et ayant une direction axiale correspondant à la direction de la largeur, et transmet la puissance du sabot d'entraînement à la partie de support arrière, dans lequel
la partie de support avant comporte une biellette avant (130) qui se déplace dans la direction avant-arrière le long de l'unité de rail, basé sur la puissance transmise par le sabot d'entraînement, et opère ainsi le panneau mobile entre la position inclinée vers le haut et la position d'ouverture totale,
la partie de support arrière comporte une biellette arrière (150) qui coulisse sur l'arbre coulissant de l'élément de transmission de puissance, et tournant ainsi, autour d'un axe s'étendant dans la direction de la largeur, entre une position inclinée vers le bas déplaçant le panneau mobile vers la position de fermeture totale et une position debout déplaçant le panneau mobile vers la position inclinée vers le haut,
**caractérisé en ce que**
la biellette arrière comporte une partie de base (151) ayant une forme de plaque et une partie de recouvrement (152) réalisée en un matériau résineux et recouvrant la partie de base,
la partie de recouvrement comporte une surface de coulissement (155-157) qui coulisse sur l'arbre de coulissement, et
la surface coulissante est située à l'écart de la partie de base dans la direction de la largeur.

2. Dispositif de toit ouvrant selon la revendication 1, dans lequel
la surface coulissante est prévue uniquement sur un côté dans la partie de base dans la direction de la largeur.

3. Dispositif de toit ouvrant selon la revendication 1, dans lequel
la partie de support arrière comporte une partie de sollicitation de biellette (163) qui sollicite, vers l'axe de coulissement, la biellette arrière située dans la position inclinée vers le bas.

4. Dispositif de toit ouvrant selon l'une quelconque des revendications 1 à 3, dans lequel
l'axe coulissant est un premier axe coulissant (184), et la surface coulissante est une première surface coulissante (155, 156),
l'élément de transmission de puissance comporte un deuxième axe coulissant (185) qui s'étend dans une même direction que le premier axe coulissant tout en étant espacé du premier axe coulissant,
la partie de recouvrement comporte une deuxième surface coulissante (157) sur laquelle coulisse le deuxième axe coulissant, et
le premier arbre coulissant et le deuxième arbre coulissant coulissent respectivement sur la première surface coulissante et la deuxième surface coulissante, ce qui permet à la biellette arrière de se déplacer entre la position inclinée vers le bas et la position debout.

5. Dispositif de toit ouvrant selon la revendication 4, dans lequel
l'un des premier et deuxième arbres coulissants comporte un rouleau (186) roulant sur une surface coulissante associée qui est l'une des première et deuxième surfaces coulissantes, et
un module d'élasticité du rouleau est inférieur au module d'élasticité de la partie de recouvrement.

6. Dispositif de toit ouvrant selon l'une quelconque des revendications 1 à 3, dans lequel
un matériau de la partie de base est un métal.

7. Dispositif de toit ouvrant selon l'une quelconque des revendications 1 à 3, dans lequel
la partie de recouvrement comporte une rainure coulissante (153) qui est concave vers la partie de base dans la direction de la largeur,
au moins une partie de la surface coulissante est une surface intérieure de la rainure coulissante, et
l'arbre coulissant de l'élément de transmission de puissance est reçu dans la rainure coulissante lorsque l'arbre coulissant coulisse sur au moins une partie de la surface coulissante.
